# FASCICULE DE BREVET EUROPEEN

(11) **EP 0 755 961 B1**
(45) Date de publication et mention de la délivrance du brevet: **25.02.2004**
(21) Numéro de dépôt: 96420252.7
(22) Date de dépôt: 25.07.1996
(51) Int. Cl.: C08G 77/385, C08G 77/382

(54) **Polyorganosiloxanes halogénés et leurs procédés d'obtention**
Halogenierte Polyorganosiloxane und Verfahren zu deren Herstellung
Halogenated polyorganosiloxanes and processes for their preparation

(30) Priorité: 25.07.1995 FR 9509269
(43) Date de publication de la demande: 29.01.1997
(73) Titulaire: RHODIA CHIMIE, 92408 Courbevoie Cédex (FR)
(72) Inventeur: Jost, Philippe, 69440 Taluyers (FR); Karrer, Philippe, 68200 Mulhouse-Bourtzwiller (FR); Mignani, Gérard, 69008 Lyon (FR); Olier, Philippe, 69007 Lyon (FR)
(74) Mandataire: Fleurance, Raphael

(56) Documents cités:
- EP-A- 0 246 913
- DE-A- 4 240 274
- FR-A- 2 483 437
- US-A- 5 233 071

## Description

Le domaine de l'invention est celui des polyorganosiloxanes (POS) halogénés issus d'une réaction d'hydrosilylation d'oléfines halogénées (e.g. des α-oléfines), réaction que l'on peut également présenter comme étant l'addition d'un composé silicié hydrogéné sur un réactif halogéné présentant une ou plusieurs insaturation(s) ethylénique(s) ou alcynylique(s).

Sans que cela ne soit limitatif, l'halogène plus particulièrement visé est le fluor.

La présente invention concerne ainsi des (poly)organosiloxanes cycliques ou non halogénés - de préférence fluorés -, présentant au moins un atome de silicium substitué par au moins un radical halogéné Rf (e.g. fluoré).

La présente invention concerne également un procédé de préparation de tels composés.

Le rôle des halogènes et en particulier du fluor et de la liaison carbone/fluor, dans l'apport de propriétés spécifiques à des systèmes polymères organiques, est une notion bien connue en chimie des polymères.

On sait notamment que la fluoration et plus précisément l'introduction de motifs perfluorés dans les polymères, amène :
- une modification des énergies de surface dans le sens de l'abaissement,
- une amélioration de la stabilité thermique et chimique,
- de même que des propriétés d'organophobie et d'oléophobie.

Depuis les années 1970, ce type de fonctionnalisation par halogénation, et en particulier par perfluoration, est appliqué à des polymères silicones, en particulier du type polyorganosiloxane cyclique ou non.

On dispose ainsi d'huiles silicones greffées par des motifs fluorés, qui trouvent des applications dans le domaine textile à titre d'agent anti-tâches ou anti-salissures ou qui peuvent être utilisées comme lubrifiant, comme agent anti-adhérent spécifique vis-à-vis de certains adhésifs (silicones à fort pouvoir adhésif), comme agent anti-gras, ou bien encore comme anti-mousse. Les fluides silicones fluorés peuvent être également formulés avec différents épaississants pour former des mastics ou tous autres matériaux d'étanchéification et/ou de jointage.

Sous forme réticulée, ces silicones fluorés peuvent être mis sous forme de diverses pièces techniques par moulage ou par extrusion.

Pour plus de détails sur ces silicones fluorés, on peut se référer à l'Article de OGDEN R. PIERCE intitulé "Fluorosilicons" - 1970 - John Wiley & Sons Inc. pages 1 à 15.

Une première stratégie de synthèse industrielle connue de silicones à motifs perfluorés, consiste essentiellement à "hydrosilyler" un dihalogénohydrogénoorganosilane, tel que le MeHSiCl₂ (Me = méthyle), par un composé insaturé porteur d'un motif perfluoré et de formule générale : CH₂=CH**―Rf** (**Rf** = motif perfluoré). L'addition du silane sur cette oléfine conduit à un dihalogénoorganosilane perfluoré, qui peut être hydrolysé de façon à produire un silicone fonctionnalisé, lequel peut être, par exemple, un tétramère cyclique. Il est possible de soumettre ce dernier à une redistribution pour obtenir un polyorganosiloxane (POS) linéaire perfluoré. Les réactions d'hydrosilylation qui interviennent dans ce genre de synthèse et qui mettent en oeuvre diverses combinaisons d'hybrides silicones et d'oléfines perfluorées, sont connues comme étant catalysés par des composés métalliques sélectionnés et en particulier certains métaux du groupe VIII tel que le platine. Des complexes Pt/Sn ont ainsi été employés à titre de catalyseur d'hydrosilylation - Cf. brevet **US N° 4 089 882** (SHINETSU). Cette stratégie de synthèse apparaît comme étant relativement complexe et donc coûteuse.

Dans un souci de simplification industrielle, il a été proposé une seconde stratégie de synthèse fondée sur l'hydrosilylation directe d'un silicone à motif SiH à l'aide d'oléfine α-fluorée e.g. du type CH₂=CH**―Rf** ce motif perfluoré **Rf** étant rattaché directement au CH oléfinique par un atome de carbone porteur d'au moins un atome de fluor. Là encore divers catalyseurs métalliques du groupe VIII, en particulier à base de platine, sont utilisés dans le cadre de cette réaction d'hydrosilylation. Il s'est avéré cependant que ces catalyseurs ne permettaient pas d'atteindre des rendements très élévés. En particulier, les catalyseurs d'hydrosilylation industrielle classiques à base de platine (par exemple du type KARSTEDT) ne sont pas très efficaces. En outre, il a pu être constaté que d'importantes quantités de sous-produit sont générés et ce, bien évidemment, au détriment de la perfluoration des silicones. Dans ces POS perfluorés connus, le radical **Rf** est relié directement au Si de la chaine silicone. En d'autres termes, la rotule correspond dans ce cas, à : -CH₂-CH₂-(CH₂)-ₘ avec m = 0.

Dans le brevet **US N° 5 233 071,** ce sont ces rotules qui sont mises en oeuvre. Elles proviennent de l'hydrosilylation d'α-oléfines. Mais pour pallier aux carences des catalyseurs d'hydrosilylation utilisés antérieurement, le procédé décrit dans ce brevet fait appel à des complexes organométalliques à base de cobalt [(Co₂CO₈, Co₂ CO₆) (PR₃)₃ avec R = alkyle, aryle]. Une telle proposition technique est apparue comme n'étant pas satisfaisante car les durées de réaction obtenues sont de l'ordre de quelques jours et il est indispensable d'utiliser une quantité importante de catalyseur (1-2 %), ce qui est particulièrement pénalisant pour l'économie du procédé.

Un inconvénient non négligeable de ces complexes à base de cobalt est qu'ils catalysent d'autres réactions que l'hydrosilylation. En particulier, ils peuvent participer à des processus de polymérisation par rupture de cycles époxy. Ce manque de spécificité est particulièrement gênant. En outre, ces catalyseurs ne sont pas industriels.

Le brevet **US N° 5 348 769** divulgue des polyorganosiloxanes linéaires ou cycliques, comprenant des motifs siloxyles D substitués par un premier motif fonctionnel perfluoré de formule **-R**^{**3**} **ZRf** ainsi que d'autres motifs siloxyles **D**, porteurs d'un deuxième type de motif fonctionnel du type étherhydroxyle ou alkylhydroxyle. La rotule ou le pont reliant Si à **Rf** du premier motif fonctionnel perfluoré, est constitué notamment par : -(CH₂)ₓ Z avec x = 2,3 ou 4 et Z = NHCO, NHSO₂, O₂C, O₃S, OCH₂CH₃, NHCH₂CH₂ ou CH₂CHOHCH₂. Le catalyseur mis en oeuvre est, de préférence, l'acide chloroplatinique. Une telle technique n'est pas des plus simples, car elle nécessite la préparation préalable du réactif oléfinique perfluoroalkylé. Ceci allonge notablement les durées de synthèse et par suite cela augmente le coût de revient du procédé.

Hormis ces rotules dont les précurseurs sont des α-oléfines perfluoroalkylées de formule CH₂ = CH - **Rf,** la littérature technique antérieure décrit également des ponts dont les précurseurs oléfiniques sont du type CH₂=CH-Ⓛ-Rf ; la liaison chimique entre Ⓛ et **Rf** étant une liaison ester. Cette dernière résulte de la réaction d'une fonction carboxylique avec un alcool perhalogéné, de préférence perfluoré. Et généralement, ladite fonction carboxylique est le produit de l'hydrolyse d'un anhydride d'acide.

C'est ainsi que la demande de brevet PCT **WO 94/12561** divulgue des POS greffés par des motifs fluorés uniquement en position α et ω aux extrémités des chaînes silicones. Ces POS α-ω alkylesterperfluorés ne présentent pas des propriétés optimales, en ce qui concerne l'abaissement de tension de surface ainsi que l'oléophobie et l'hydrophobie.

La demande de brevet européen **N° 0 640 644** décrit quant à elle, des dérivés silicones perfluorés **(Rf),** utilisables dans des formulations cosmétiques. Ces dérivés silicones perfluorés sont caractérisés par des motifs siloxyles D, porteurs de greffons perfluorés de trois types différents, à savoir : 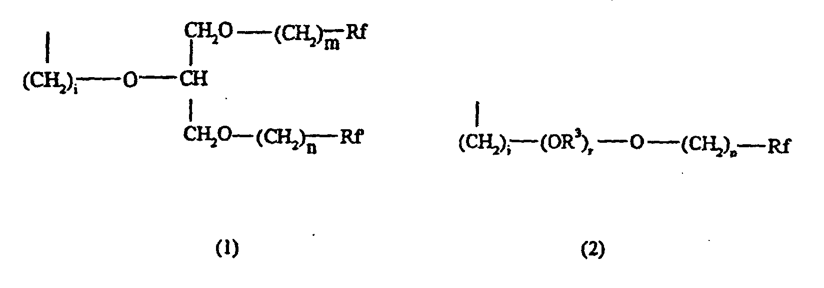 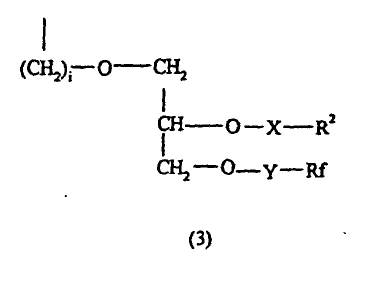 avec R², R³ = alkyle, e.g. CH₃ ;
2 ≤ i ≤ 16, e.g. i = 3 ; 1 ≤ m,n ≤ 6 ; 0 ≤ r ≤50 ;
le nombre de motifs siloxyles D ainsi greffés étant compris entre 1 et 200 ;
X, Y = simple liaison, -CO-, alkylène en C₁-C₆ ;

Ces greffons perfluorés (1) à (3) ont en commun la présence de liaisons étheroxydes au sein de la rotule reliant le radical perfluoré Rf au silicium. Ces liaisons éthers constituent autant de points de rupture possible par attaque chimique, sous certaines conditions.

Il s'agit là d'un inconvénient majeur pour ces POS perfluorés connus, car il est clair que dans certaines applications, le caractère labile des fonctions perfluorés n'est pas admissible

Il ressort de cette revue de l'art antérieur qu'il n'existe pas de POS halogénés - de préférence (per)fluorés -, chimiquement stables, dans lesquels les greffons latéraux, pendants et fluorés résultent de l'hydrosilylation d'oléfines perfluorées par des SiH et présentent des rotules alkyles et/ou alkylesters, à l'exclusion des éthers,

De plus, l'art antérieur divulgue encore moins de tels POS susceptibles d'être obtenus d'une manière simple, économique et donc parfaitement industrielle.

Dans ces circonstances, l'un des objectifs essentiels de la présente invention est de pallier cette carence en de tels POS halogénés - de préférence (per)fluorés -, et mieux encore de fournir de nouveaux POS perfluorés possédant des greffons bifides présentant chacun une ou deux chaines perfluorées parallèles, lesdits POS étant ainsi dotés d'un caractère cristallin, les rendant particulièrement adaptés à l'application anti-salissures.

Un autre objectif essentiel de l'invention est de fournir un procédé de préparation de POS halogénés - de préférence (per)fluorés - ce procédé étant du type de ceux dans lesquels on fait réagir au moins une oléfine halogénée (e.g.fluoré) avec un POS comportant au moins un motif SiH et en présence d'une quantité efficace de catalyseur selon un mécanisme d'hydrosilylation ;
ledit procédé se devant de mettre en oeuvre des produits de départ disponibles ou aisément préparables et se devant également de reposer sur une méthodologie simple à mettre en oeuvre, ne nécessitant pas d'équipements sophistiqués et permettant d'atteindre de hautes performances de rendement et de pureté en POS perfluorés finaux.

Un autre objectif essentiel de l'invention est d'offrir un procédé de perhalogénation (perfluoration) du type de celui sus-mentionné, qui soit caractérisé par une excellente cinétique d'hydrosilylation et par un fort taux de conversion des motifs SiH en motifs **SiRoRf** avec **Ro** = pont divalent et **Rf** = motif perfluoré.

Un autre objectif essentiel de la présente invention est de mettre à disposition un procédé de perhalogénation - de préférence (per)fluoration - de POS porteurs de SiH, qui permettent de recourir à des catalyseurs d'hydrosilylation traditionnels, simples à manipuler et peu onéreux, par exemple de nature platinique (KARSTEDT), et ce, sans sacrifier aux impératifs d'efficacité optimale, de rendement, de pureté des produits finaux, et de spécificité.

Un autre objectif essentiel de l'invention est que le susdit procédé permette d'obtenir de manière simple et économique des POS (e.g. huile silicone) perfluorés qui soient monofonctionnels.

Ces objectifs, parmi d'autres, sont atteints par la présente invention qui concerne principalement de nouveaux POS perhalogénés - de préférence perfluorés - ainsi qu'un nouveau procédé de perhalogénation - de préférence perfluoration - par hydrosilylation de POS porteurs de SiH, ledit procédé étant l'un de ceux permettant d'obtenir les nouveaux POS précités.

La présente invention a donc, tout d'abord, pour objet des polyorganosiloxanes (POS) -halogénés - de préférence fluorés comprenant des espèces de formules générales **(I)** et/ou **(II)** suivantes : 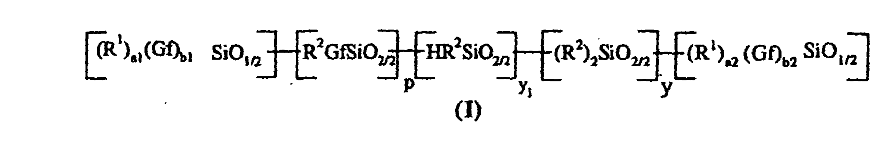 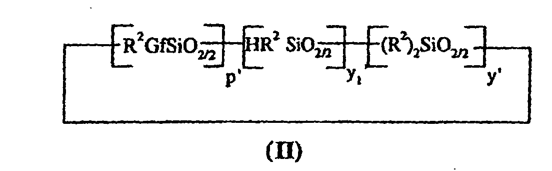 dans lesquelles :
- a1 + b1 = 3, a2 + b2 = 3 ; a, a2 = 2 ou 3 ; b1, b2 = 0 ou 1 ;
   1 ≤ p ≤ 200, de préférence 1 ≤ p ≤ 90 ;
   0 ≤ y₁ ≤ 10, de préférence 0 ≤ y₁ ≤ 5 ;
   0 ≤ y ≤ 100, de préférence 0 ≤ y ≤ 50 ;
   avec 5 ≤ p + y₁ + y ≤ 200, de préférence 10 ≤ p + y₁ + y ≤ 100
   et [p/(p + y + y₁ + 2)].100 ≥ 3, de préférence ≥ 5 ;
- 1 ≤ p' ≤ 9 de préférence 1 ≤ p' ≤ 4,5 ;
- 0 ≤ y'₁ ≤ 1 ; de préférence 0 ≤ y'₁ ≤ 0,25 ;
- 0 ≤ y' ≤ 5 ; de préférence 0 ≤ y' ≤ 0,5 ;
- chaque radical R¹, R², d'une part, est identique ou différent de ses semblables de même exposant et de l'autre radical d'exposant différent et, d'autre part, représente un groupement (cyclo)alkyle linéaire ou ramifié en C₁-C₁₂, - de préférence C₁-C₆ -, un groupement hydrocarboné et avantageusement un aryle, un aralkyle, un alkylaryle, ces groupements étant éventuellement substitués,
- **Gf** :
   - est un reste monovalent fonctionnel éventuellement halogéné - de préférence fluoré - de nature identique ou différente dans les p ou p' motifs siloxyles D et/ou les deux motifs siloxyles M, où il est présent,
   - et répond à la formule moyenne ci-après : 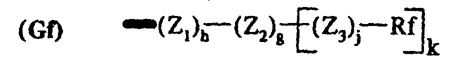
      Δ avec h = 1 ; g = 0,1 ; j = 0,1 et k = 1 ou 2 ;
         Légende : les valences libres représentées en gras - dans tout le présent exposé étant celles rattachées directement au silicium du POS et situées le plus près dudit silicium ;
      Δ **avec la condition** selon laquelle au moins un reste Gf dans lequel k ≠ 0 est présent dans ledit POS (I) ou (II) ;
      Δ Z₁ étant un radical divalent de formule : 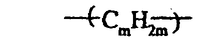 avec m ≥ 2
         **avec la condition** selon laquelle si m = 2, alors au moins une partie des restes Gf sont des restes dans lesquels g ≠ 0 ;
         et au moins l'un des hydrogènes substituant les carbones de Z1 pouvant éventuellement être remplacé par un alkyle inférieur en C₁-C₆ linéaire ou ramifié, de préférence par un méthyle ;
      Δ Z₂ étant un radical di ou trivalent de formules : 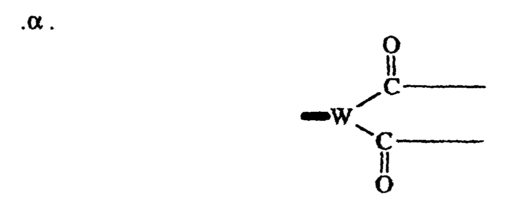
         - l'une ou les deux valences libres du (ou des) carbonyle(s) étant reliées à -Z₃Rf et, dans le cas où l'une seulement des susdites valences libres est reliée à -Z₃Rf, alors l'autre est reliée à un hydroxyle, 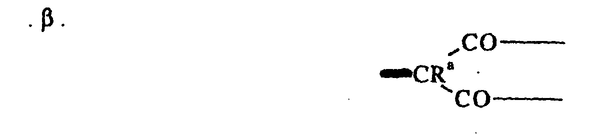
         - au moins l'une des valences libres des carbonyles étant reliée à -Z₃-Rf, et, dans le cas où l'une seulement de ces valences libres est reliée à -Z₃-Rf, alors l'autre est reliée à un alcoxyle en C₁-C₆, linéaire ou ramifié.
         - R^{a} = H, aryle ou alkyle inférieur linéaire ou ramifié en C₁-C₆, de préférence CH₃; 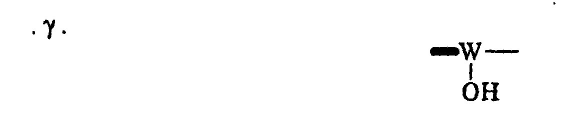 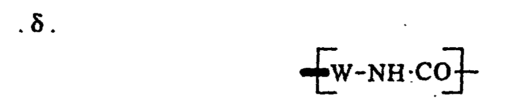 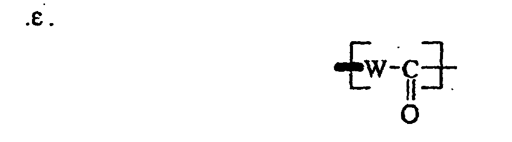 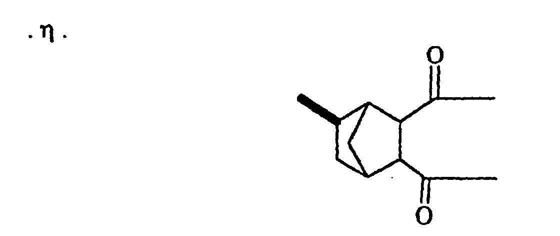
         - h = 0 dans **Gf** ;
         - l'une ou les deux valences libres du (ou des) carbonyle(s) étant reliées à -Z₃-Rf et, dans le cas où l'une seulement des susdites valences libres est reliée à -Z₃Rf, alors l'autre est reliée à un hydroxyle ou à un alcoxyle en C₁-C₆ linéaire ou ramifié ; 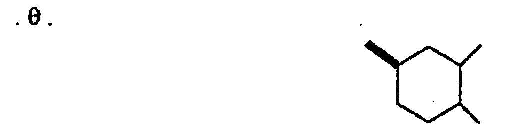
         - l'une et/ou l'autre des deux valences libres différentes de la valence -, étant reliée(s) à Z₃-Rf, et dans le cas où l'une seulement de ces deux valences est reliée à -Z₃-Rf alors l'autre est reliée à OH ou à un alcoxyle en C₁-C₆ linéaire ou ramifié ; 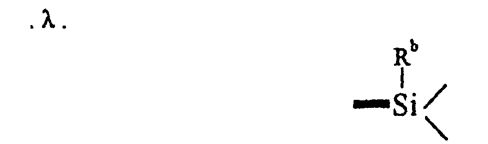
         - l'une et/ou l'autre des deux valences libres différentes de la valence -, étant reliée(s) à Z₃-Rf, et dans le cas où l'une seulement de ces deux valences est reliée à -Z₃-Rf, alors l'autre est reliée à OH ou à un alcoxyle en C₁-C₆ linéaire ou ramifié ;
         - R^{b} = H au alkyle inférieur en C₁-C₆ linéaire ou ramifié ; le méthyle étant préféré,

      → W représentant un radical hydrocarboné cyclique ou non, en particulier aliphatique et/ou alcényle et/ou alcynyle et/ou aromatique, W étant, en outre exempt de liaison étheroxyde - O - ;

      Δ Z₃ est un radical divalent de formule :

         - U-CₙH₂ₙ -

         - avec n ≥ 1 et U = O, S, NH, NHSO₂, de préférence O ;
      Δ et Rf étant un radical halogéné - de préférence fluoré - et plus préférentiellement encore un radical fluoroalkyle linéaire ou ramifié répondant à l'une des formules suivantes :

         - C_{q}F_{2q} - CF₃

         avec q ≥ 0,

         - C_{q}F_{2q} - H avec q ≥ 1 ;

         - NR^{rf}SO₂ Cq F₂q - CF₃

         avec q ≥ 0 et R^{rf} = H, aryle, ou alkyle inférieur en C₁-C₆ linéaire ou ramifié (de préférence CH₃) ;

         - NR^{rf}SO₂ Cq F₂q - H

         avec q ≥ 1 et R^{rf} tel que défini supra ;

La Demanderesse a eu le mérite de produire ces nouveaux POS (per)halogénés - de préférence (per)fluorés - grâce à la sélection judicieuse de différentes espèces de greffons perfluorés par Rf, dont notamment :
- celle à rotule alkylène ―(CₘH₂ₘ)― avec m > 2,
- celle à rotule alkylène ―(CₘH₂ₘ)― avec m = 2, qui est nécessairement associé avec au moins une autre espèce de rotule dans un POS donné,
- celle à rotule alkylène ―(CₘH₂ₘ)― (m > 2), prolongée par un radical hydrocarboné W di ou trivalent, exempt d'éther -O-, et présentant une ou plusieurs extrémités carboxyles libres ou assurant la liaison avec des restes perfluorés Rf; avec la condition selon laquelle si toutes les extrémités carboxyles sont libres sur un greffon donné, alors le POS comprend au moins un autre greffon perfluoré ;
- celle à rotule alkylène ―(CₘH₂ₘ)― (m > O), prolongée par W qui s'inscrit lui-même dans ou qui est relié à une unité cyclique comprenant au moins un radical divalent -O- cette unité comportant par exemple :
   un anhydride d'acide
   et/ou un époxyde
   et/ou un éther cyclique, ,
- celle à rotule alkylène ―(CₘH₂ₘ)― (m > 2) prolongée par W ω-hydroxylé et/ou alcoxylé par un radical dont l'extrémité libre = Rf,
- celle à rotule alkylène -(CₘH₂ₘ)- (m > 0), prolongée par un appartenant à la famille générale des radicaux W, di ou trivalent, et relié ou s'inscrivant dans une unité cyclique dont la ou les valence(s) libre(s) différente(s) de celle reliée au Si, assure(nt) la liaison avec l'(ou les) éventuel(s) reste(s) Z₃Rf et/ou avec des substituants alkyles ou alcoxyles ou hydroxyles ;
- celle à rotule alkylène -(CₘH₂ₘ)- (m > 0), prolongée par un reste silyle trivalent dans lequel les valences libres différentes de celle reliée au Si, assure(nt) la liaison avec l'(ou les) éventuel(s) reste(s) Z₃Rf et/ou avec des substituants alkyles ou alcoxyles ou hydroxyles ;
- et celle à rotule exempte de radical alkylène divalent mais présentant un radical W directement branché sur le Si.
Ces nouveaux POS monofonctionnalisés par des radicaux perfluorés Rf, satisfont à la condition selon laquelle au moins un reste **Gf** dans lequel k ≠ 0 est présent dans le POS (**I**) ou (**II**) ;

Tous les greffons perfluorés par Rf ont l'avantage d'être chimiquement stables.

Un autre avantage majeur des greffons **Gf** selon l'invention est qu'ils peuvent être obtenus à l'aide de catalyseurs industriels, par exemple ceux à base de platine, tel que le catalyseur de KARSTEDT. Outre le fait qu'ils sont utilisés en faible quantité, ces catalyseurs sont intrinsèquement économiques. Ils contribuent ainsi à diminuer le coût de revient des nouveaux composés siliciés perhalogénés (perfluorés) selon l'invention.

Ce coût est d'autant plus faible que la structure du greffon selon l'invention permet d'accéder à des cinétiques d'hydrosilylation rapides, à de hauts rendements et à de hauts taux de conversion des motifs SiH en motifs SiGf.

De préférence, le reste monovalent Rf correspond à -CpF₂ₚ-CF₃, avec p compris entre 3 et 20, de préférence entre 5 et 12 et, plus préférentiellement encore, entre 7 et 10. En pratique, on peut aussi mettre en oeuvre e.g. des mélanges de R_{f} dont les p = 7, 8 et 9.

Selon une disposition avantageuse de l'invention, les polyorganosiloxanes (**I**), (**II**) perfluorés qu'elle concerne, comprennent un ou plusieurs greffons **Gf** dans lesquels :
h = 1, g = 1 avec Z₂ du type comprenant un groupement W correspondant à un radical mono ou polycyclique saturé, insaturé ou aromatique, substitué ou non, et choisi, de préférence, parmi les cycles suivants :

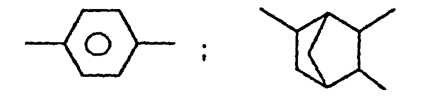

Selon une modalité préférée de l'invention, les POS sont linéaires et répondent à la formule (**I.1**) suivante : 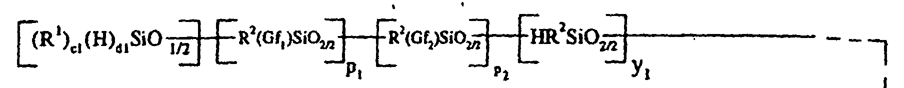 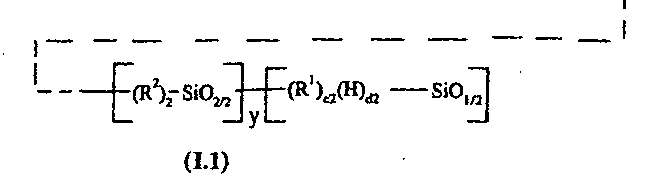 avec
□ R¹, R² = méthyle, propyle ou butyle ;
□ c₁ + d₁ = 3 et, de préférence c₁ = 2, d₁ = 1
   c₂ + d₂ = 3 et, de préférence c₂ = 2 d₂ = 1
□ p₁, p₂ ≥ 0 ; p₁ + p₂ ≥ 1 ;
□ 0 ≤ y₁ ≤ 100, de préférence 0 ≤ y₁ ≤ 50 avec la condition selon laquelle si y₁ = 0 alors d1 et/ou d2 = 1 ;
□ 0 ≤ y ≤ 500, de préférence 0 ≤ y ≤ 500 ;
□ **Gf**_{**1**} = **Gf** avec h = k = 1 et g = j = 0 ;
□ **Gf**_{**2**} = **Gf** avec h = g = 1, k = 1 ou 2, j = 0 ou 1 et Z₂ = 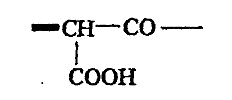 ou : 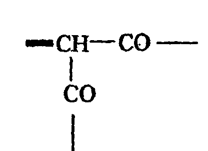
De manière plus préférée encore, les POS **(I)** selon l'invention sont des polymères linéaires perfluorés de formule **(I.1.1)** suivante : 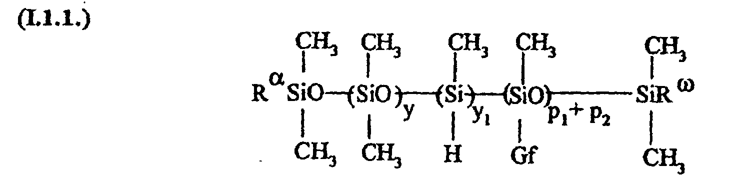 avec y, y₁, p₁, p₂, **Gf** = **Gf**_{**1**} ou **Gf**_{**2**} tels que définis supra et R^{α}, R^{ω} identiques ou différents et représentant : H ou alkyle en C₁-C₆.

Avantageusement, **Gf** est choisi dans la liste de groupements suivants :
- .a. 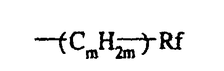 avec m ≥ 2, h = 1, g = 0, j = 0, k = 1 ;
   et dans le cas où m = 2, alors g = 1 avec W = -(CH₂)-_{t≥1} et/ou il est prévu au moins un autre groupement **Gf** différent de **Gf**_{**1**} ; m étant de préférence compris entre 2 et 10 ;
- .b. 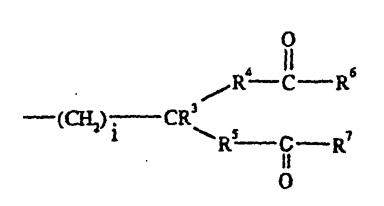 avec :
   - h = 1, g = 1, j = 0 ou 1, k = 1 et i = 2 à 10 ;
   - R³ = H, alkyle en C₁-C₆,
   - R4, R⁵ = identiques ou différents entre eux et correspondant à -(CH₂)-_{u≥0},
   - R⁶, R⁷ = identiques ou différents entre eux représentant : OH, Z₃ - Rf avec Z₃ = -O-(CH₂)-ₛ, s étant compris entre 0 et 10, l'un au moins des radicaux R⁶, R⁷ correspondant à Z₃ Rf ;
- .c. 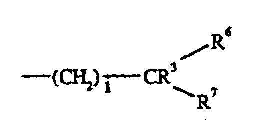 dans laquelle:
   - h = 1, m ≥ 0, g = 1, j = 0 ou 1, k = 1 et i = 2 à 10 ;
   - R³, R⁶, R⁷ sont tels que définis supra ;
- .d. 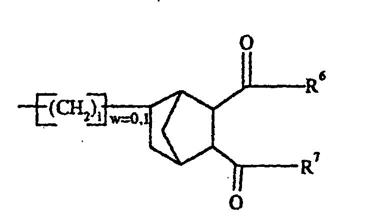 avec :
   - h = 1, m ≥ 0, g = 1, i = 2 à 10, j = 1, k = 1,
   - R⁶, R⁷ tels que définis ci-dessus ;
- .e. 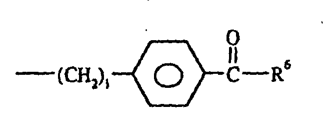 avec :
   - h = 1, m ≥ 0, g = 1, i = 2 à 10, j = 0 ou 1, k = 1,
   - R⁶, tel que défini supra ;
- .f. et leurs mélanges.

Conformément à l'invention, on envisage un sous groupe de greffons Gf particuliers dénommés "greffons bifides", que l'on privilégie tout spécialement, compte-tenu des caractéristiques remarquables qu'ils sont susceptibles de conférer aux POS sur lesquels ils sont greffés. L'invention concerne donc également des POS du type de ceux définis supra et caractérisés en ce qu'ils comprennent au moins une espèce **(I)** et/ou **(II)** substituée par au moins un reste **Gf** halogéné - de préférence fluoré - choisi dans le sous-groupe de radicaux suivants :
→ 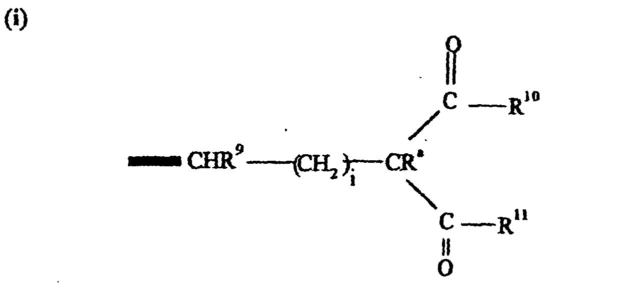 avec
   Δ R^{a}, R⁹ indépendamment = H ou alkyle inférieur C₁-C₆ linéaire ou ramifié, de préférence CH₃ ;
   Δ R¹⁰, R¹¹ indépendamment = OH, alcoxyle C₁-C₆ linéaire ou ramifié, ou Z₃-Rf ; l'un au moins des radicaux R¹⁰, R¹¹ représentant -Z₃Rf ;
   Δ i = 1 à 10, de préférence 1 à 3, et plus préférentiellement encore i = 1 ;
→ 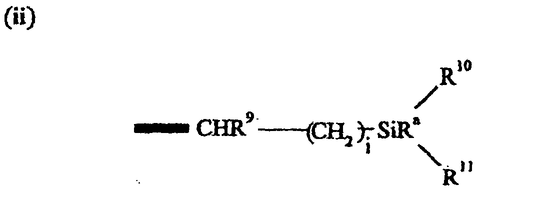 avec R⁹, R^{a}, R¹⁰, R¹¹ et i tels que définis supra ;
→ 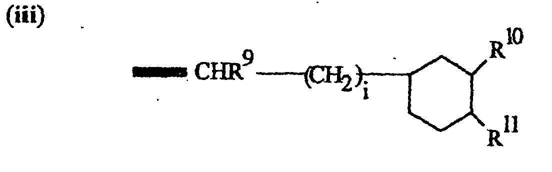 avec R⁹, R¹⁰, R¹¹ et i tels que définis supra ; le cycle hexyle pouvant être éventuellement substitué.
→ et les mélanges des susdits radicaux.

A ce stade de l'exposé, il convient de s'attarder quelque peu sur cette espèce particulièrement intéressante de composés POS selon l'invention, que sont les POS perhalogénés - perfluorés - porteurs de greffons **Gf** bifides tels que définis supra. Plus précisément, on s'intéresse ici aux **Gf** bifides dont les deux pattes sont constituées chacune d'un radical perhalogéné - perfluoré - Z₃Rf. Ces greffons **Gf** bifides bis perfluorés sont cristallins procurent notamment une certaine cristallinité aux POS qu'ils substituent. Cela optimise les propriétés hydrofugantes de ces derniers, qui se trouvent ainsi très bien adaptés comme produit actif dans des compositions antisalissures, entre autres.
Ces greffons **Gf** bifides bifluorés peuvent être associés, notamment, à des **Gf** bifides monoperfluorés et/ou non perfluorés.
Les POS de cette espèce sont caractérisés en ce qu'ils comprennent au moins une espèce **(I)** et/ou **(II)** substituée par au moins un reste **Gf** halogéné - de préférence fluoré - répondant à la formule **(i), (ii)** ou **(iii)** telle que définie supra,
les radicaux R¹⁰ et R¹¹ de la formule considérée correspondant : 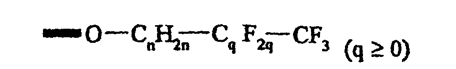 ou

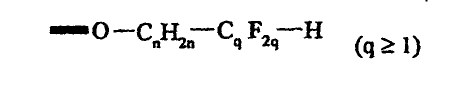

Les taux de substitution des POS de cette espèce par des **Gf** bifides bisperfluorés et/ou monoperfluorés et/ou non-perfluorés, sont parfaitement maitrisables par l'homme du métier, lors de la synthèse. Ce sont les applications visées pour les POS greffés, qui déterminent le réglage convenable de ces taux de substitution. Au sein de cette espèce, les **Gf** bifides à rotule alkylmalonyle **(i)** sont plus spécialement retenus en pratique.

Tous ces greffons **Gf** confèrent de la nouveauté et un grand intérêt technique aux POS, auxquels ils se rattachent.

Compte tenu des précisions données ci-dessus quant aux POS selon l'invention et à leurs greffons Gf, on peut déduire que les POS tout spécifiquement mais non limitativement visés sont, e.g., des poly(diméthyl, méthylperfluoroalkyl)siloxanes ou des poly(méthylalkyl, méthylperfluoroalkyl)siloxanes avec le premier groupement alkyl = (propyle, butyle, pentyle, hexyle_).

Les composés POS perfluorés linéaires de formule moyenne (**I.1**) et (**I.1.1**) ont naturellement leurs correspondants cycliques de formule moyenne (**II.1**) et (**II.1.1**) ; mais, dans ce cas, la somme des p' + y'₁ + y' est inférieure ou égale à 10, de préférence à 5.

Il est à noter que tous les POS (**I**) et (**II**), en particulier (**I.1**) et (**I 1.1**) (**II.1**) et (**II.1.1**) selon l'invention, comportent au moins un greffon **Gf** porteur d'au moins un premier reste perfluoré Rf et éventuellement un ou plusieurs **Gf** porteurs d'autres restes Rf identiques ou différents entre eux et au premier reste Rf précité.

De multiples combinaisons de greffons **Gf** sur les POS de l'invention, sont envisageables : **Gf** avec Z₂ a à λ et en particulier Gfₐ à Gfₑ Gf(**i**), Gf(**ii**) et Gf (**iii**), ces trois derniers greffons étant particulièrement préférés.

Selon une disposition facultative mais néanmoins avantageuse de l'invention, les POS comportent, par molécule, au moins un motif siloxyle : 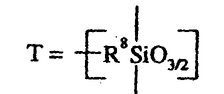 avec R⁸ répondant à la même définition que R¹, R² et **Gf**, telle que donnée supra et, éventuellement, des motifs siloxyles Q = [SiO_{4/2}].

S'agissant des caractéristiques fonctionnelles des produits selon l'invention, il faut souligner le fait que les polyorganosiloxanes fluorés mono ou polyfonctionnels décrits supra ont de notables propriétés d'abaissement de tension de surface et d'oléo-et/ou- d'hydrophobie, entre autres. Ces propriétés peuvent être ajustées en contrôlant les proportions de motifs **D** greffés ou non, présents dans les POS fluorés. Cela correspond aux proportions molaires p, y, y₁ et p', y', y'₁ données par les formules **(I)** et **(II)** ci-dessus définies.

Il est à noter que des valeurs de m = 2 ou 3 dans **Z**_{**1**} sont les garantes d'une bonne tenue thermique pour les POS fluorés considérés. Cette propriété peut notamment être intéressante dans le cadre de l'application lubrifiant.

Les POS fluorés selon l'invention peuvent se présenter sous forme d'huile plus ou moins visqueuse mais également sous forme de résines Q et/ou de résines résultant de la réticulation de chaines POS linéaires ou cycliques, par l'intermédiaire de fonctionnalités réticulantes que lesdites résines peuvent présenter.

Un autre objet de l'invention est constitué par un procédé de préparation de POS halogénés - de préférence fluorés - cycliques ou linéaires, caractérisé en ce qu'il consiste essentiellement à faire réagir :
- A → au moins une huile polyalkylhydrogénosiloxane - de préférence polyméthylhydrogénosiloxane - ;
- B → avec au moins une oléfine halogénée - de préférence fluorée - précurseur de Gf₁ tel que défini supra et de formule Gf₁ₚ :

   Z₁ₚRf

   dans laquelle :
   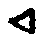 Zᵢₚ = précurseur oléfinique de Z₁,
   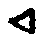 Rf tel que défini supra
   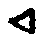 et avec m > 2 dans Z₁ ;
- C → en présence d'une quantité efficace de catalyseur métallique d'hydrosilylation, de préférence à base de platine.

Il s'agit là d'une première méthode - la plus directe pour implanter des greffons **Gf** perfluorés sur une chaine POS, par hydrosilylation. Les greffons obtenus sont des alkylène-perfluoroalkyles.
Les précurseurs oléfiniques, de préférence vinyliques, sont aisément disponibles ou faciles à obtenir.

Dans toute la description du procédé, les radicaux précurseurs des radicaux présents dans les POS finaux sont identifiés par l'indice "p" accolé à (aux) indice(s) déjà indiqués.

Pour obtenir un mélange nouveau de POS dans le cas où m = 2 dans Z₁ₚ, il conviendra de faire également réagir l'huile A avec au moins un autre précurseur oléfinique Z₁ₚ avec m > 2 et/ou avec d'autres précurseurs de Gf différents, tel que cela est exposé ci-après.

Ainsi, conformément à un deuxième mode de mise en oeuvre du procédé selon l'invention, on fait réagir l'huile - A - avec :
- B' → avec au moins une oléfine halogénée -de préférence fluorée - précurseur de Gf₁ tel que défini supra et de formule Gf₁ₚ :

   Z₁ₚ Rf

   dans laquelle :
   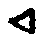 Z₁ₚ = précurseur oléfinique de Z₁,
   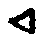 Rf tel que défini supra,
   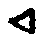 et avec m = 2 dans Z₁ ;
- D → avec au moins une oléfine de formule:

   Z₁ₚZ₂ₚ

   dans laquelle Z₁ₚ = précurseur oléfinique de Z₁ et Z₂ₚ = précurseur de Z₂ ;
- B → et avec le réactif B tel que défini supra,
- C → en présence, d'une quantité efficace de catalyseur métallique d'hydrosilylation, de préférence à base de cobalt et/ou de platine ;
   le produit réactionnel A + B' + D et/ou B étant mis en présence d'un réactif E :
   E → du type Z₃ₚ Rf avec Z₃ₚ = précurseur de Z₃ et Rf tel que défini supra, pour former un (ou des) radical(aux) **Gf**_{**2**}**.**

Dans ce deuxième mode, l'un au moins des réactifs B et D doit être mis en oeuvre, de manière à assurer la nouveauté des produits obtenus. En pratique, ce deuxième mode de mise en oeuvre en plusieurs étapes, l'hydrosilylation de B' étant réalisée séparément de celles des autres oléfines B ou D. L'hydrosilylation de B' est, par exemple, catalysée par un produit à base de cobalt, tandis que les autres hydrosilylations sont catalysées au platine.

Selon un troisième mode de mise en oeuvre, on fait réagir l'huile A - avec :
- D' → avec au moins un oléfine de formule :

   Z₁ₚ Z₂ₚ

   dans laquelle :
   Z₁ₚ = précurseur oléfinique de Z₁
   Z₂ₚ = précurseur oléfinique de Z₂ ;
- C → en présence d'une quantité efficace de catalyseur métallique d'hydrosilylation, de préférence à base de platine ;
   le produit réactionnel A + D'étant, éventuellement, mis en présence d'un réactif:
   E' → du type Z₃ₚ Rf avec Z₃ₚ = précurseur de Z₃ et Rf tel que défini supra, pour former un (ou des) radical(aux) **Gf**_{**2**}.

Dans les deuxième et troisième modes de mise en oeuvre la construction des greffons **Gf** s'effectue par croissance de racines de ces greffons, ces racines étant fixées sur les chaines POS. Il s'agit en quelque sorte d'un aboutement des éléments constitutifs Z₁, Z₂, Z₃ et Rf.

A l'inverse, dans le quatrième mode de mise en oeuvre, on préfabrique un précurseur global de **Gf** = **Gf**_{**p**}, puis on fixe ensuite celui-ci sur les POS.

En d'autres termes, cela consiste essentiellement à faire réagir :
- A → au moins une huile polyalkylhydrogénosiloxane - de préférence polyméthylhydrogénosiloxane -
- F → avec au moins une oléfine halogénée - de préférence fluorée - précurseur de **Gf** et de formule **(Gf**_{**p**}**)** : 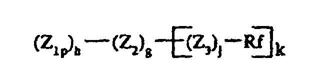 dans laquelle :
   - Z₁ₚ est le précurseur oléfinique du radical Z₁ tel que défini supra,
   - Z₂, Z₃, Rf, h, g, j et k sont également définis supra.
   - avec les conditions selon lesquelles :
      * si k = h = 1 et m = 2 alors g = 1 et Z₂ est tel que défini ci-dessus
- C → en présence d'une quantité efficace de catalyseur métallique d'hydrosilylation, de préférence, à base de platine.
De préférence, le précurseur Gfₚ de Gf répond à l'une des formules suivantes : 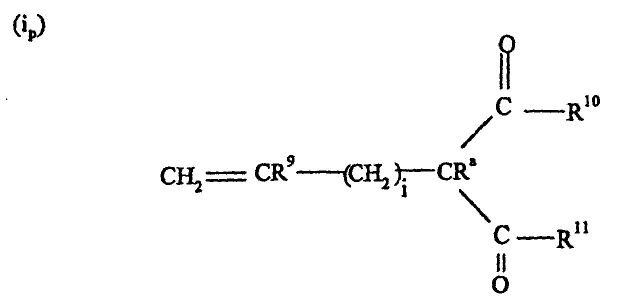 avec
Δ R^{a}, R⁹ indépendamment = H ou alkyle inférieur C₁-C₆ linéaire ou ramifié, de préférence CH₃ ;
Δ R¹⁰, R¹¹ indépendamment = OH, alcoxyle C₁-C₆ linéaire ou ramifié, ou Z₃-Rf ; l'un au moins des radicaux R¹⁰, R¹¹ représentant Z₃Rf ;
Δ i = 0 à 10, de préférence 0 à 3, et plus préférentiellement encore i = 1 ; 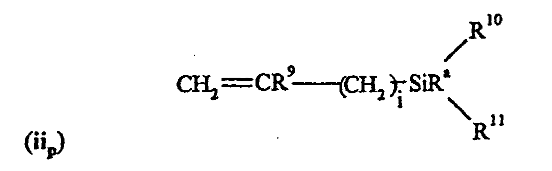 avec R⁹, R^{a}, R¹⁰, R¹¹ et i tels que définis supra ; 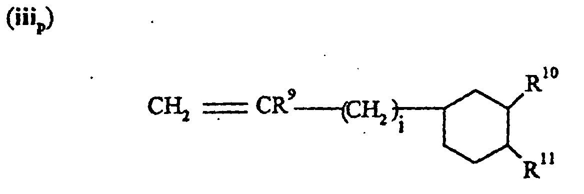 avec R⁹, R¹⁰, R¹¹ et i tels que définis supra ; le cycle hexyle pouvant être éventuellement substitué.

Ces précurseurs oléfiniques **Gf**_{**p**} des greffons **Gf** présentent un ou deux groupements R¹⁰, R¹¹ perfluorés (R¹⁰ et/ou R¹¹ = Z₃Rf) et sont obtenus par mise en réaction selon un mécanisme de transestérification :
→ d'au moins un composé à hydrogène mobile constitué par le radical Z₃Rf hydrogéné, i.e. : H-Z₃Rf, tel que défini ci-dessus, de préférence un alcool ou un thiol;
→ avec des produits de départ formés par des composés de formule (iₚ), (iiₚ) ou (iiiₚ) tels que définis supra et dans lesquels au moins l'un des radicaux R¹⁰, R¹¹ est un alcoxyle linéaire ou ramifié en C₁-C₆.

Il est à noter que les précurseurs oléfiniques **Gf**_{**p**} **(i**_{**p**}**), (ii**_{**p**}**)** et **(iii**_{**p**}**)** évoqués ci-dessus constituent de nouveaux intermédiaires réactionnels (nouveaux synthons). Il s'ensuit que la présente invention a également pour objet un intermédiaire réactionnel (synthon) susceptible d'être mis en oeuvre, notamment dans le procédé décrit supra, caractérisé en ce qu'il répond à au moins l'une des formules suivantes : 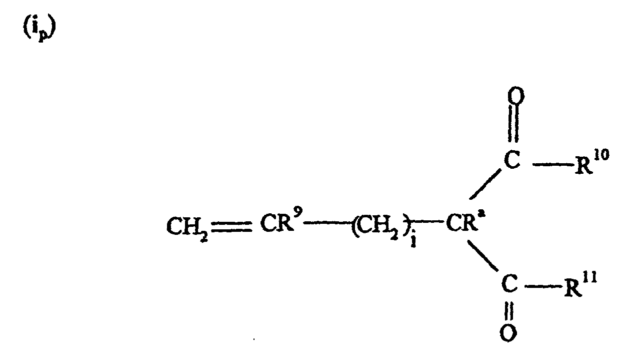 avec R^{a}, R⁹ indépendamment = H ou alkyle inférieur C₁-C₆ linéaire ou ramifié, de préférence CH₃ ;
au moins l'un des radicaux R¹⁰, R¹¹ correspond à un alcoxyle linéaire ou ramifié en C₁-C₆, le méthoxyle et l'éthoxyle et le propyle étant préférés ; 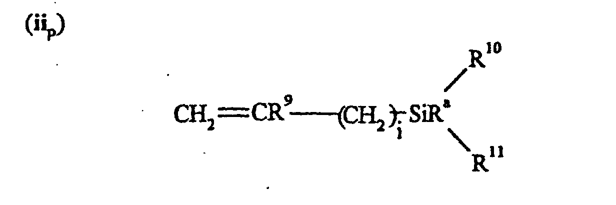 avec R9, R^{a}, R¹⁰, R¹¹ et i tels que définis supra ; 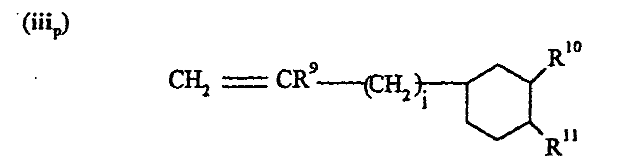 avec R⁹, R¹⁰, R¹¹ et i tels que définis supra ; le cycle hexyle pouvant être éventuellement substitué.

L'un des avantages majeurs découlant de l'utilisation de ce type de composés-précurseurs **Gf**_{**p**} insaturés et perfluorés, tient à la possibilité de mettre en oeuvre un catalyseur industriel sélectionné parmi les composés à base de Ni, Pd ou Pt de préférence à base de Pt. Cela peut être, par exemple, un catalyseur de KARSTEDT, avantageusement employé en faible quantité e.g. de l'ordre de 10 à 50 ppm par rapport au composé POS considéré, avant hydrosilylation (huile Si-H).

La méthodologie déterminée par le procédé selon l'invention est particulièrement simple. La cinétique d'hydrosilylation est rapide. Le rendement et le taux de conversion des SiH sont particulièrement élevés. C'est un procédé performant et économique.

Selon une modalité préférée de l'invention, le POS à motifs ≡ SiH, est progressivement mis en présence de ou des oléfine(s) **Gf**_{**p**} perhalogénée(s) ou non, le catalyseur étant contenu dans l'un et/ou l'autre de ces deux constituants POS et **Gf**_{**p**} du milieu réactionnel. Il en va en particulier ainsi, pour ce qui concerne l'alkylène oléfinique perfluoré et pour l'alkylène-anhydride d'acide oléfinique perfluoré.

Les conditions d'hydrosilylation retenues dans le cadre du procédé selon l'invention, sont classiques et donc aisément déterminables pour l'homme du métier.

En pratique, l'hydrosilylation se déroule en autant de phases qu'il existe de réactifs oléfiniques différents.

Le milieu réactionnel est mis sous agitation et porté à une température comprise entre 50 et 150 °C. La réaction se déroule à pression atmosphérique et sur généralement une durée de plusieurs heures. Le taux de transformation des motifs SiH est supérieur à 99 % en nombre.

Dans le cas où l'on a affaire à des **Gf** du type anhydride, il est envisageable de soumettre au moins une partie de ces fonctions anhydrides, à une hydrolyse, de manière à générer des extrémités carboxyliques libres, puis à une estérification d'au moins une partie desdites extrémités carboxyliques à l'aide de réactifs du type Z₃ₚ - Rf, Z₃ₚ étant un précurseur hydrogéné de Z3, tel que défini supra, Rf étant également tel que défini ci-dessus.

S'agissant des autres fonctionnalités de type prérotule Rf, décrites ci-dessus et qui peuvent être portées par les siliciums du POS selon l'invention, leur greffage peut intervenir avant, pendant ou après le greffage des restes alkylènes perfluorés par Rf.

Parmi les POS susceptibles d'être utilisés comme produits de départ du procédé selon l'invention, on peut citer à titre d'exemples :
* les POS linéaires tels que les polyméthylhydrogénosiloxanes notamment ceux du type :
   . Me₃ SiO (SiMeHO)ₑ Si Me₃,
      avec e = 10 à 100, de préférence 50 ;
   . ou Me₃SiO(SiMeHO)ₑ₁ (SieMe₂O)ₑ₂Si Me₃
      avec e₁ = 10 à 100, e₂ = 0 à 50 ;
* les POS cycliques tels que le tétraméthyltétracyclosiloxane D'4.
A titre d'exemples de POS aptes à être perhalogénés - de préférence perfluorés - grâce au procédé selon l'invention, on peut citer e.g. :

Me₃ SiO (SiMe₂O)-₈(SiHMeO)-₄ Si Me₃

Me₃ SiO (SiMeHO)-₅₀ SiMe₃

Les POS selon l'invention peuvent se présenter sous forme d'huiles pures ou bien encore sous forme d'émulsion aqueuse.
C'est ainsi que l'invention concerne également une émulsion aqueuse caractérisée en ce qu'elle contient :
- au moins un POS ou obtenus par le procédé tels que définis supra ;
- de l'eau ;
- et au moins un tensioactif

Selon encore un autre de ses aspects, l'invention a pour objet :
→ l'application des composés siliciés perhalogénés (perfluorés) *per se* tels que décrits ci-dessus ou ceux obtenus par le procédé de perhalogénation divulgué supra, à titre de :
   - lubrifiant
   - agent abaisseur de tension de surface,
   - agent anti-salissures,
   - agent anti-adhérent,
   - agent anti-mousse,
   - agent oléophobe et/ou hydrophobe,
   - matière première pour la réalisation d'élastomères ou de films résistant aux agressions chimiques et aux solvants,
→ et un film et/ou revêtement doué d'au moins l'une des propriétés sus-mentionnées.

Enfin, l'invention vise également une composition antisalissure comprenant :
- au moins un POS ou obtenuspar le procédé tels que définis supra ;
- et/ou au moins une émulsion telle que définie supra
- le ou les susdits POS mis en oeuvre étant de préférence des POS porteurs :
   * de greffons bisfonctionnalisés par des radicaux halogénés - perfluorés - tels que définis supra,
   * éventuellement de greffons monofonctionnalisés par des radicaux halogénés - fluorés - eux-aussi définis supra.
   * et éventuellement d'autres greffons fonctionnalisés par d'autres fonctions que les fonctions bis ou monohalogénées-fluorées.

### EXEMPLES

### EXEMPLE I : SYNTHESE DE SILICONES GREFFES PAR DES MOTIFS PERFLUORES CATALYSE AU COBALT

Dans un réacteur de 100 ml on introduit sous azote, 20 g (0,058 mole de motifs Si-H) de résine suivante avec les rapports molaires : D'/T = 1 et Si-O-Et / Si = 2 avec une fonctionnalité de 288,5 méqu/100 g de résine.

(MeHSiO)_{0,5} (MeSiO_{3/2})_{0,5} (O_{1/2}Et)₂

33,1 g (0,074mole, excès 30 % molaire) de propényl-C₈F₁₇ et 0,2734 g (0,0008 mole, 0,5 % massique / résine) de Co₂CO₈.

Le milieu est homogène. On chauffe à 47° C dans le bain. On observe une exothermicité et la température de la masse réactionnelle atteint 80 °C. On laisse réagir 30 mn. Le taux de transformation des motifs Si-H est de l'ordre de 98 %. Au bout de 16 h de réaction à 45 °C, le taux de transformation des motifs Si-H est quantitatif. On laisse revenir à la température ambiante et on rajoute 150 ml de méthanol. Il y a pas de dégagement de CO provenant du catalyseur. On procède à 5 lavages au méthanol. La résine fonctionnalisée est soluble dans le méthanol. Après dévolatilisation (90°C, 1h, 6 mn de Hg), on récupère 16 g d'une résine. On solubilise dans le trichlorotrifluoroéthane le reliquat de l'extraction. Le mélange résine dévolatilisée et reliquat est filtré. On obtient un liquide légèrement jaune qui par dévolatilisation conduit à 20 g d'une résine limpide jaune clair.

### EXEMPLE II : SYNTHESE DE SILICONES A MOTIFS PERFLUORES Gf₁ AVEC m > 2 /CATALYSE PAR DES COMPLEXES ORGANOMETALLIQUES DU PLATINE.

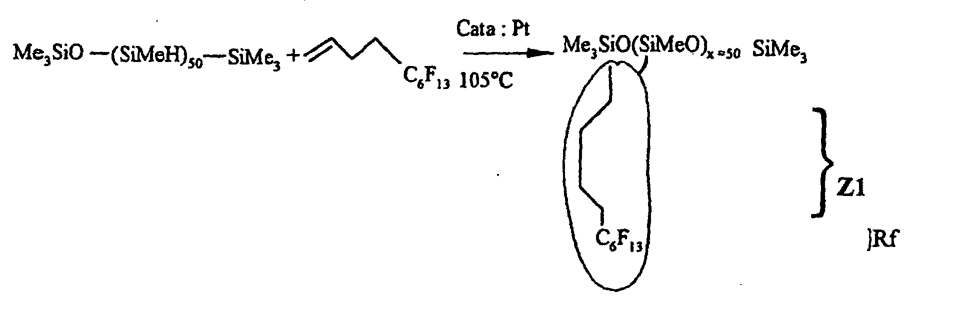

On introduit dans un réacteur 177,9 g (0,47 mole, 20 % excès molaire / motifs Si-H) de CH₂ = CH - (CH₂)₂-C₆F₁₃ (4-perfluorohexyl-1-butène) = Gf₁ avec m = 4 dans Z₁, 10,5 µl de catalyseur KARSTEDT (11,9 % en masse) et 12 mg d'acétate de sodium (Aldrich, pureté 99,995 %). On agite à 370 t/mn. On porte à 110 °C et on coule en 1h20, 25g d'huile silicone à motifs Si-H de type RHODORSIL® H68 (RHONE POULENC) correspondant à une huile polyméthyl hydrogénosiloxane α,ω (triméthylsiloxy) = MeSiO(SiMeHO)₅₀ SiMe₃, contenant 0,015 eq de SiH par gramme de H68 et de formule : Me₃SiO(SiOMeH)₅₀ SiMe₃. En fin de coulée le taux de transformation des motifs Si-H est > 99 %. Après 3 h de réaction le taux de transformation des motifs Si-H est > 99,5 %. Une analyse par IR montre qu'il ne reste plus de motifs Si-H. La masse réactionnelle est constamment homogène durant toute la durée de la réaction d'hydrosilylation. Par dévolatilisation à 100° C sous 1 mm d'Hg, on récupère 168,2 g d'une huile légèrement jaune claire. La quantité de volatil est de 32 g. Les analyses structurales confirment la structure de cette huile.

### EXEMPLE III :

On utilise le même procédé que celui décrit dans l'exemple n° II mais on change légèrement les conditions opératoires (coulée du fluide Si-H en 60 minutes, température et durée de réaction : 80 °C et 6 heures) et en utilisant les réactifs et les quantités suivantes :
- 10 mg d'acétate de sodium
- 80 g (0,214 mol) de 4-perfluorohexyl 1-butène (Gfl, m = 2 dans Z₁)
- 130 microlitres d'une solution à 1% (p/p) de platine de KARSTEDT
- 50 g (0,105 éq Si-H) d'une huile de structure

   Me₃SiO(SiMeHO)₈(SiMe₂O)₄₂SiMe₃
on obtient, après dévolatilisation, 82,2 g d'une huile de structure :

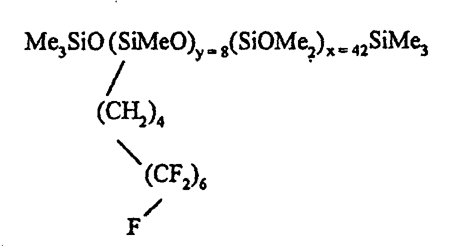

### EXEMPLE IV :

On utilise le même procédé que celui décrit dans l'exemple n° II mais on change légèrement les conditions opératoires (coulée du fluide Si-H en 15 minutes, température et durée de réaction : 95 °C et 3h20) et en utilisant les réactifs et les quantités suivantes :
- 16,5 g (0,044 mol) de 4-perfluorohexyl 1-butène (Gf₁, m = 2 dans Z₁).
- 11 microlitres d'une solution de platine de KARSTEDT à 13,6 % (p/p)
- 33,7 g (0,04 éq Si-H) d'une huile de structure

   Me₃SiO(SiMeHO)₄(SiMe₂O)₄₆SiMe₃
on obtient, après dévolatilisation, 42,3 g d'une huile de structure :

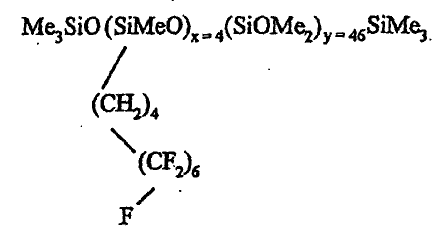

### EXEMPLE V : PROPRIETES DES POS PERFLUORES SELON L'INVENTION AU REGARD DE L'ABAISSEMENT DE L'ENERGIE DE SURFACE

Les énergies de surface γ_{**L**} des huiles selon les exemples II à IV et d'un POS du type polydiméthylsiloxane (PDMS) sont regroupées dans le tableau 1 suivant (c = 4 et d = 6) :

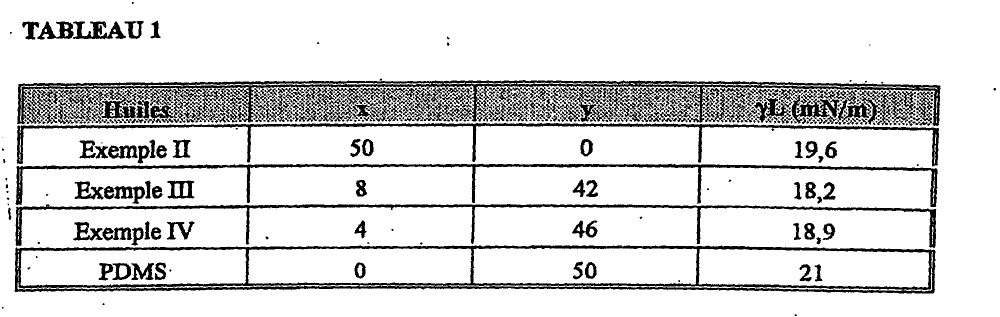

A titre de comparaison, les énergies de surface du polytrifluoropropylméthylsiloxane mesurées dans les mêmes conditions sont de 24,2 mN/m pour le FL 100 SHIN ETSU et de 23,7 mN/m pour le FS 1265 DOW CORNING

Cette aptitude à diminuer les énergies de surface ouvre des débouchés aux POS perfluorés selon l'invention, en tant qu'ingrédient actif dans des anti-mousses, des lubrifiants, des démoulants, des antiadhérents (papier ou analogues et béton ou pierre).

A chaque liquide correspond un numéro et on attribue à l'huile perfluorée une cotation qui correspond au numéro le plus élevé du liquide qui reste au moins 30 secondes sur la surface du tapis.

### * Traitement du tapis :

L'huile perfluorée selon l'invention est déposée, à différentes quantités, sur un tapis en polyamide-6 à partir d'une solution dans le 1,1,2-trifluoro trichloroéthane ; le tapis est d'abord mis 14 heures dans une étuve à 30 °C puis est placé dans un four pendant 6 minutes à 80 °C et 4 minutes à 140° C.

### * Résultats :

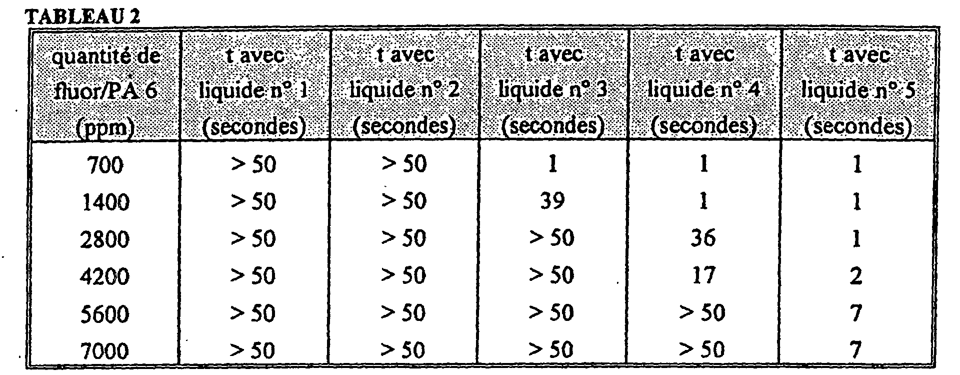

Voici la composition des liquides standards de cotation utilisés :
liquide 1 : NUJOL (paraffine liquide)
liquide 2 : NUJOL/n-hexadécane 65/35 en volume à 21 °C
liquide 3 : n-hexadécane
liquide 4 : n-tétradécane
liquide 5 : n-dodécane

Ainsi à l'huile de VI.1 correspond une cotation de 2 à 700 ppm de fluor, de 3 à 1400 et à 4200 ppm de fluor et de 4 à 2800, 5600 et 7000 ppm de fluor.

### EXEMPLE VI :

Dans un réacteur tétracol de 500 ml, muni d'une agitation mécanique centrale, d'un thermomètre, d'un réfrigérant vertical à boules et d'un septum, on introduit :
- 87,6 g d'anhydride succinique allylé (soit 0,626 mol).

Le milieu est mis sous agitation, inerté à l'azote, porté à une température de 90°C puis on introduit :
- 30 µl (soit 20 ppm/masse de l'huile Si-H) d'une solution dans le divinyltétraméthyldisiloxane d'un complexe du platine à 9,5 % en poids de platine ligandé par du divinyltétraméthyldisiloxane (catalyseur de Karstedt).

On coule alors, en 3 h 45 minutes :
- 140 g (soit 0,525 éq Si-H) d'une huile poly(diméthyl, méthylhydrogénosiloxane) dont les caractéristiques sont les suivantes :
   * Mn = 1 364 g,
   * 0,375 éq Si-H pour 100 g d'huile,
   * structure moyenne :

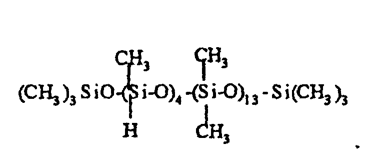

7 h après le début de la réaction, le taux de transformation des fonctions Si-H est de 99,3 % ; on effectue alors une dévolatilisation sous vide (130 °C pendant 6 heures sous 0,05 mbar) pour éliminer l'excès d'anhydride succinique allylé et on obtient 210 g d'une huile de structure :

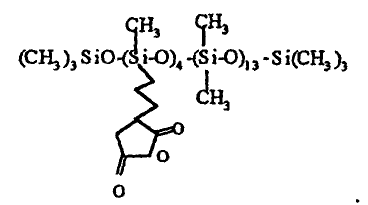

Dans un réacteur tétracol de 250 ml, muni d'une agitation mécanique centrale, d'un thermomètre, d'un réfrigérant vertical à boules et d'un septum, on introduit :
- 43,5 g de l'huile précédente soit 0,1056 éq de fonctions anhydrides,
- 54,1 g de 1-perfluorooctyl, 2-hydroxy éthane C₈F₁₇CH₂CH₂OH (soit 0,1166 mol),
- 36,6 g de toluène,
- et 0,65 g de triéthylamine.

Le milieu est mis sous agitation, inerté à l'azote et porté à une température de 70 °C pendant 3 h. On effectue alors une dévolatilisation sous vide (130 °C pendant 5 h sous 2 mbar) pour éliminer le toluène, la triéthylamine et l'excès de 1-perfluorooctyl, 2-hydroxy éthane et obtenir 83,85 g d'huile de structure :

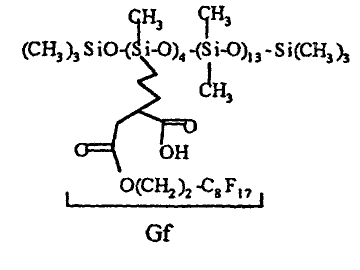

### EXEMPLE VII : SYNTHESE DE MONOMERES MONO ET BIS-PERFLUOROALKYLES = PRECURSEURS Gfₚ de GREFFONS Gf BIFIDES :

### Réaction :

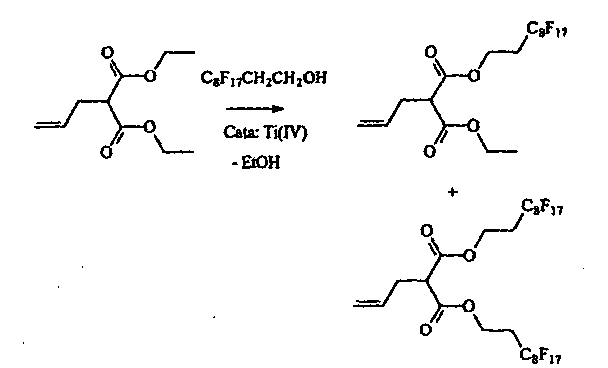

Dans un réacteur de 51 on introduit sous azote 2018 g (10,09 mole) d'allyldiéthylmalonate, 2340g (5,04 mole) de l'alcool C₈F₁₇CH₂CH₂OH, 3,8 g (0,016 mole) de Ti(OEt)₄ et 1000 g de toluène sec. On porte à 95°C dans la masse réactionnelle la réaction se déroule sous vide partiel (~ 500 mm d'Hg) pour favoriser l'élimination de l'éthanol. Après 5 h de réaction on rajoute de nouveau 7,3 g (0,032 moles) de Ti(OEt)₄. On laisse réagir 120 h. Une analyse par chromatographie gazeuse indique que le taux de transformation de l'alcool perfluoré est de 100%. On rajoute 60g d'alumine neutre (50-200 µm) et on filtre sur carton. On dévolatilise les légers sous vide pompe (5 mm d'Hg, 3h40).

On réalise ensuite une distillation sous vide qui permet de séparer les deux monomères mono et bis-perfluoroalkyles.

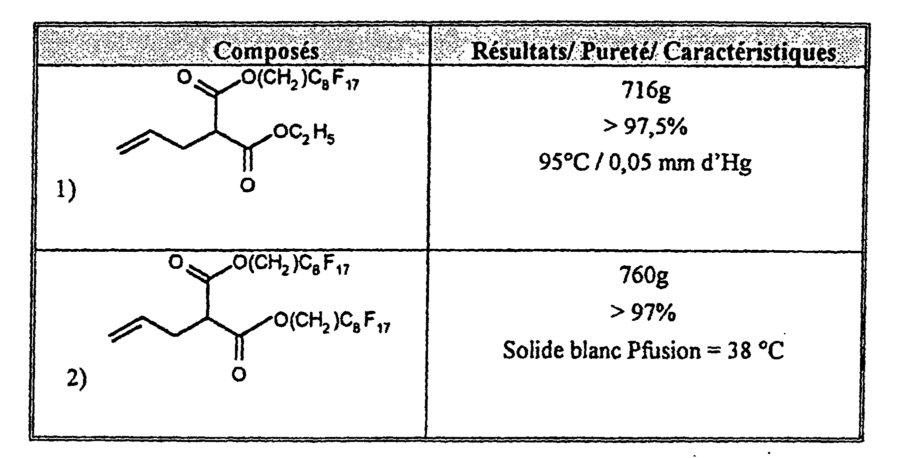

Les analyses IR et RMN confirment la structure de ces deux monomères.

### EXEMPLE VIII : SYNTHESE DE POS SUBSTITUES PAR DES GREFFONS Gf BIFIDES MONOPERFLUORES :

Dans un réacteur de 250 ml sous azote on introduit 20g de toluène sec, 2,15 µl de catalyseur de KARSTEDT (11,5% de Pt) et 42g (61,7 méqui.) du monomère (1) à motifs mono perfluoroalkyle de l'Exemple VII. On porte la masse réactionnelle à 91-93°C. On coule ensuite 4,76g (53,6 méqui. de motifs Si-H) d'une huile silicone à motifs Si-H de structure Me₃SiO(SiMe₂O)₂₅(SiMeHO)₇₀SiMe₃. La durée de coulée est de 45 mn. Le taux de transformation des motifs Si-H est 99% au bout de 48h. On dévolatilise cette huile silicone à 130°C sous 2 mm bars durant 2 h. On récupère 43,6 g d'une huile limpide. Les analyses IR et RMN confirment la structure de cette huile silicone.
La Mn de cette huile = 49 500 et % de fluor = 45,7.

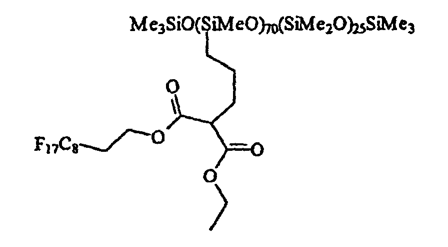

### EXEMPLE IX : SYNTHESE DE POS SUBSTITUES PAR DES GREFFONS Gf BIFIDES BIS-PERFLUORES :

Dans un réacteur de 250 ml sous azote, on introduit, 86g de toluène sec et 3 µl d'un catalyseur de KARSTEDT (11,5 % de Pt). On porte cette masse réactionnelle à 90° C. On coule ensuite en 2h30 un mélange constitué de 435,6g du monomère (2) bis-perfluoré décrit dans l'exemple VII et 80g d'une huile silicone à motifs Si-H de structure Me₃SiO(SiMeHO)₅₀SiMe₃. (1268 méqu de motifs Si-H). On laisse réagir 12h à 90° C. Le taux de transformation des motifs Si-H est de 34,4%. On filtre à 90° C sur carton. On obtient un liquide incolore que l'on dévolatilise à 110° C sous 1 mm d'Hg durant 3h30. On récupère 485,4g d'un solide blanc dont le point de fusion est de 58°C. Les analyses IR et RMN confirment la structure de cette huile silicone.

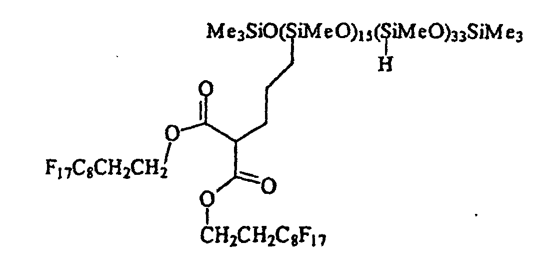

### EXEMPLE X : DETERMINATION DU TAUX DE CRISTALLINITE

On donne ci-après le taux de cristallinité mesuré par RX sur le monomère (2) de l'exemple VII. (Précurseur **Gf**_{**p**} de greffons **Gf** bifides bis-perfluorés).

Ces résultats mettent en évidence l'organisation résultant de la structure cristalline particulière dudit monomère.

L'analyse Thermique Différentielle réalisée sur le même produit met également en évidence un pic de cristallisation.

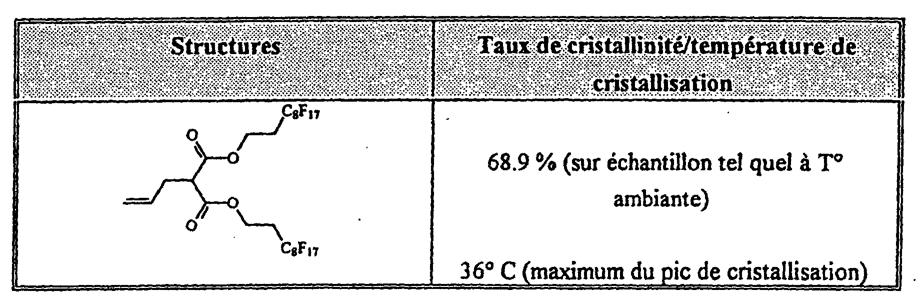

### EXEMPLE XI : REALISATION D'UNE EMULSION AQUEUSE A PARTIR DU POS PORTEUR DE GREFFONS Gf BIFIDES MONO-PERFLUORORES (1) DE L'EXEMPLE VIII :

### XI.1. Préparation

On mélange les ingrédients suivants :

| | |
|---|---|
| POS exemple VIII | 2,5 g |
| AD33 | 0,2 g |
| Imbentin 33 | 0,05 g |
| Butyldigol | 0,05 g |
| BRIJ 72 | 0,5 g. |

On ajoute progressivement de l'eau et on mélange manuellement. On rajoute ensuite 5,6 g H₂O et on émulsifie à l'aide d'un mélangeur SILVERSTON.
On obtient une émulsion blanche (extrait sec = 37 %).

| | |
|---|---|
| AD 33 (SEPPIC) | nonylphénoléthoxylé à fonctions SO₃ |
| BRIJ 72 (ICI) | Alcool stéarique éthoxylé (2 OE) |
| GENAPOL X 080 (HOECHST) | alcool gras en C₁₃ avec 8 OE |

### XI. 2 Application

Deux séries de tests sont effectuées:
- **application en solvant**
   Dépôt de 700 ppm de fluor (imprégnation d'un rond de tapis polyamide PA de 15 g) à partir de solutions diluées à 1% dans trichlorotirluoroéthane.
   Séchage 6 minutes à 80° C puis traitement thermique 4 minutes à 140° C.
- **application en émulsion**
   Dépôt de 700 ppm de fluor (application au pistolet sur un rond de tapis PA de 15 g) à partir des émulsions précédemment décrites.
   Séchage 6 minutes à 80° C puis traitement thermique 4 minutes à 140° C.

On évalue les propriétés d'hydrophobie et d'oléophobie par la pénétration ou non de liquides de tension superficielles décroissante (sur trois gouttes de liquide).

On attribue le numéro correspondant au liquide de plus faible tension superficielle qui ne pénètre pas au bout de 30 secondes pour le test d'oléophobie et de 3 minutes pour le test d'hydrophobie.

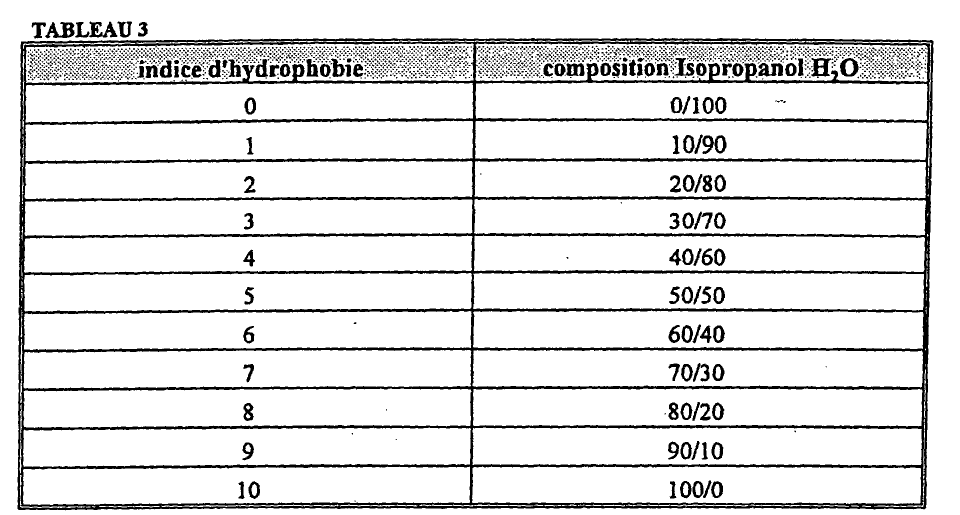

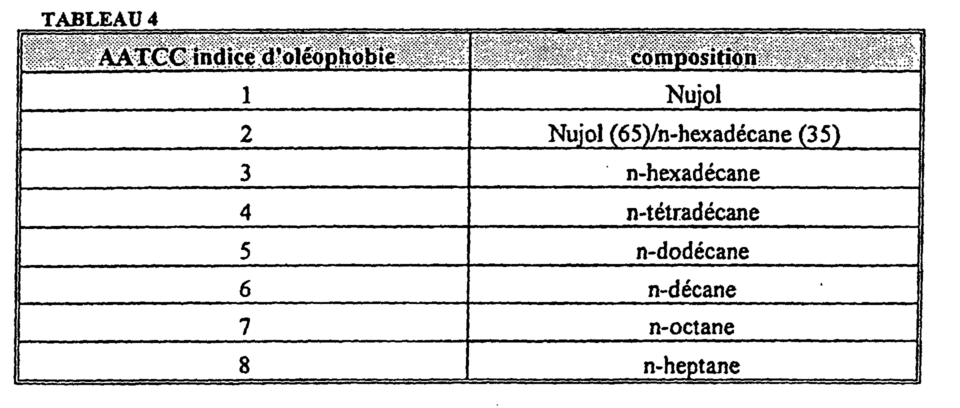

Les compositions sont données en volume à 20° C.

### XI.3 Résultats

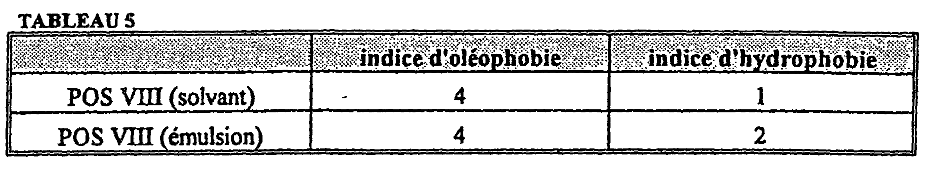

### EXEMPLE XII : ETUDE PHYSICO-CHIMIQUE DU POS PORTEUR DE GREFFONS Gf BIFIDES MONO-PERFLUORES (1) DE L'EXEMPLE VIII

### XII.1 Mouillage des dépôts

La transcription de la valeur d'usage "antisalissure" en terme de propriétés physico-chimiques peut se résumer au comportement du dépôt vis-à-vis de liquides (mouillage) et à sa tenue dans le temps au contact avec un liquide.

### XII.1.1. Méthodologie de l'étude

L'étude physico-chimique simple mise en place est la suivante :
1* Dépôt du polymère de traitement par tournette à partir de solutions à 0,25 % de polymère. Le FC 396 (polyacrylate perfluoré) (Scotchguard®), traitement de référence a été également étudié.
   Sur cette base, 6 familles d'échantillons sont étudiées - L'échantillon "tel que" ou initial et un échantillon recuit à 140° C pendant 4 mn. Ces 2 échantillons sont ensuite repris et soumis :
   soit à un test de "lessivage" consistant à faire tomber pendant 10 mn des gouttes d'eau tombant d'une hauteur de 1 mètre (initial et lavé, recuit et lavé).
   soit à un test de "trempage" dans de l'eau déminéralisée pendant 30 mn (initial et trempé, recuit et trempé)
   Ces 2 tests ont évidemment pour but de connaître la persistance du traitement.
2* Mesure de l'angle et de son évolution dans le temps (0 à 60 secondes) en contact avec les liquides de référence (eau et CH₂I₂).
   Bien que celà soit aisé, nous n'avons pas recalculé l'énergie superficielle des dépôts ainsi que son évolution. En effet, par rapport aux propriétés d'oléophobie et d'hydrophobie, l'angle entre le liquide test et la surface est suffisant.
   Les expériences ont été faites sur les produits suivants sur le POS greffé de l'Exemple VIII, sur le FC 396 et sur le Témoin PA66 non traité.

### XII 1.2. Résultats

Dans le tableau n° 6, on a reporté les angles obtenus au bout de 60 secondes.

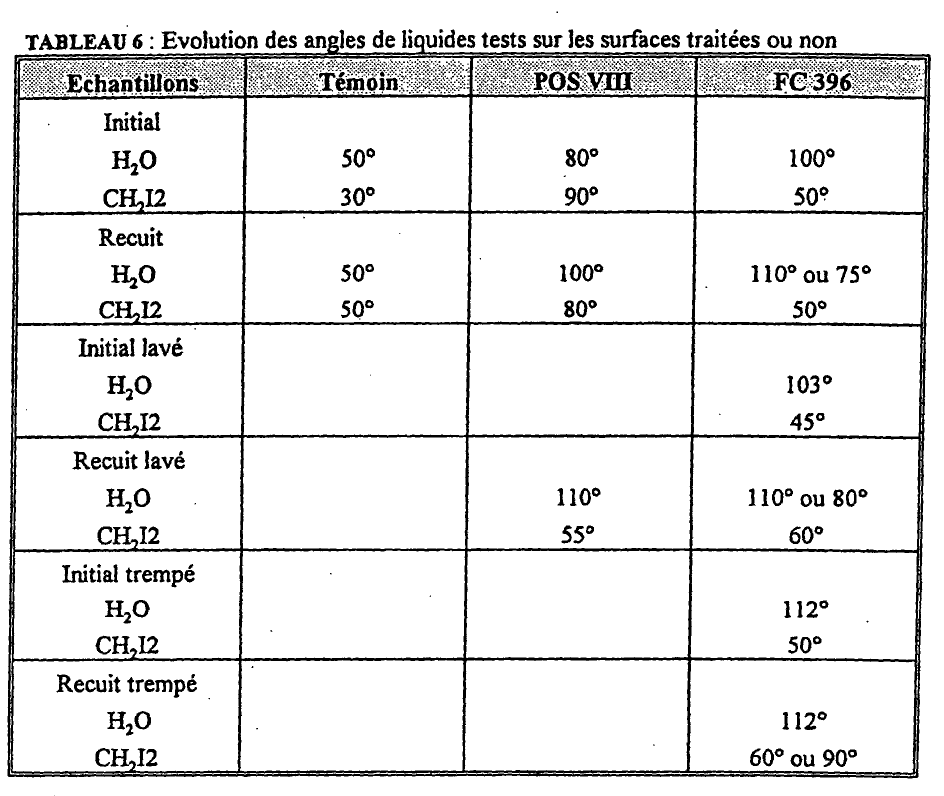

## Revendications

1. Polyorganosiloxanes (POS) halogénés - de préférence fluorés, comprenant des espèces de formules générales (**I**) et/ou (II) suivantes : 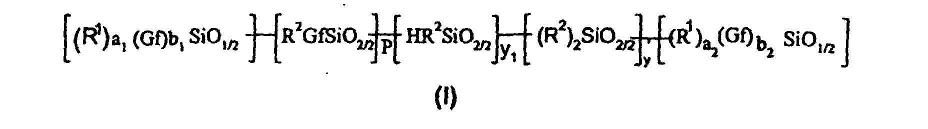 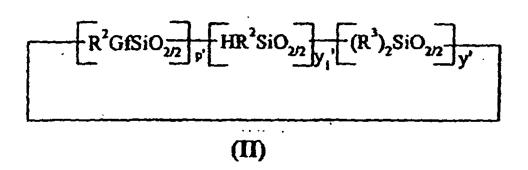 dans lesquelles :
• a1 + b1 = 3 ; a2 + b2 = 3 ; a, a2 = 2 ou 3 ; b1, b2 = 0 ou 1 ;
1 ≤ p ≤ 200, de préférence 1 ≤ p ≤ 90 ;
0 ≤ y₁ ≤ 10, de préférence 1 ≤ y1 ≤ 5 ;
0 ≤ y ≤ 100, de préférence 0 ≤ y ≤ 50 ;
avec 5 ≤ p + y₁ + y ≤ 200, de préférence 10 ≤ p + y₁ + y ≤ 100
et [p/(p + y + y₁ + 2)].100 ≥ 3, de préférence ≥ 5 ;
• 1 ≤ p' ≤ 9 ; de préférence 1 ≤ p' ≤ 4,5 ;
• 0 ≤ y'₁ ≤ 1 ; de préférence 0 ≤ y'₁ ≤ 0,25 ;
• 0 ≤ y' ≤ 5 ; de préférence 0 ≤ y' ≤ 0,5 ;
• chaque radical R¹, R², d'une part, est identique ou différent de ses semblables de même exposant et de l'autre radical d'exposant différent et, d'autre part, représente un groupement (cyclo)alkyle linéaire ou ramifié en C₁-C₁₂, - de préférence C₁-C₆ -, un groupement hydrocarboné et avantageusement un aryle, un aralkyle, un alkylaryle, ces groupements étant éventuellement substitués,
• **Gf** :
- est un reste monovalent fonctionnel halogéné de préférence fluoré - de nature identique ou différente dans les p ou p' motifs siloxyles D et/ou les deux motifs siloxyles M où il est présent ;
- et répondant à la formule moyenne ci-après : 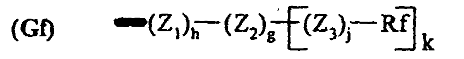
Δ avec h = 1 ; g = 0,1 ; j = 0,1 et k = 1 ou 2,
Δ **avec la condition** selon laquelle au moins un reste Gf dans lequel k ≠ 0 est présent dans ledit POS (I) ou (II) ;
Δ Z₁ étant un radical divalent de formule : 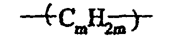 avec m ≥ 2
**avec la condition** selon laquelle si m = 2, alors au moins une partie des restes Gf sont des restes dans lesquels g ≠ 0 ;
et au moins l'un des hydrogènes substituant les carbones de Z1 pouvant éventuellement être remplacé par un alkyle inférieur en C₁-C₆ linéaire ou ramifié, de préférence par un méthyle ;
Δ Z₂ étant un radical di ou trivalent de formules : 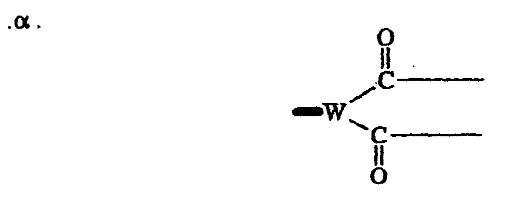
- l'une ou les deux valences libres du (ou des) carbonyle(s) étant reliées à -Z₃Rf et, dans le cas où l'une seulement des susdites valences libres est reliée à -Z₃Rf, alors l'autre est reliée à un hydroxyle, 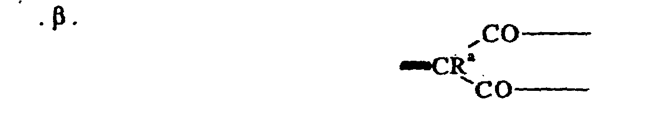
- au moins l'une des valences libres des carbonyles étant reliée à -Z₃-Rf, et, dans le cas où l'une seulement de ces valences libres est reliée à -Z₃-Rf, alors l'autre est reliée à un alcoxyle en C₁-C₆, linéaire ou ramifié.
- R^{a} = H, aryle ou alkyle inférieur linéaire ou ramifié en C₁-C₆, de préférence CH₃ ; 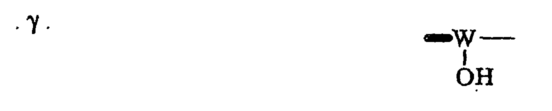 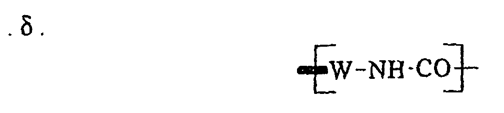 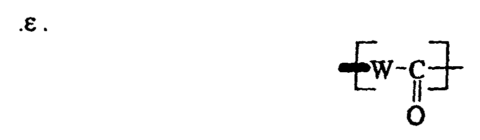 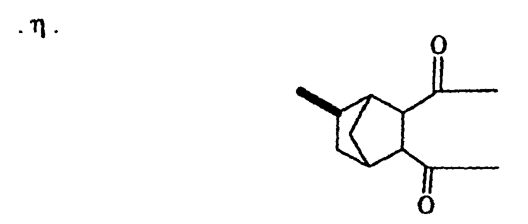
- l'une ou les deux valences libres du (ou des) carbonyle(s) étant reliées à -Z₃-Rf et, dans le cas où l'une seulement des susdites valences libres est reliée à -Z₃Rf, alors l'autre est reliée à un hydroxyle ou à un alcoxyle en C₁-C₆ linéaire ou ramifié ; 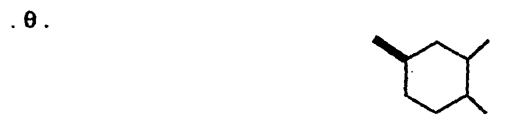
- l'une et/ou l'autre des deux valences libres différentes de la valence -, étant reliée(s) à Z₃-Rf, et dans le cas où l'une seulement de ces deux valences est reliée à -Z₃-Rf alors l'autre est reliée à OH ou à un alcoxyle en C₁-C₆ linéaire ou ramifié ; 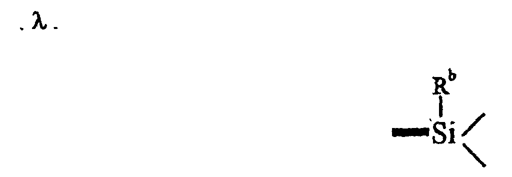
· l'une et/ou l'autre des deux valences libres différentes de la valence -, étant reliée(s) à Z₃-Rf, et dans le cas où l'une seulement de ces deux valences est reliée à -Z₃-Rf, alors l'autre est reliée à OH ou à un alcoxyle en C₁-C₆ linéaire ou ramifié ;
· R^{b}= H ou alkyle inférieur en C₁-C₆ linéaire ou ramifié ; le méthyle étant préféré,
→ W représentant un radical hydrocarboné cyclique ou non, en particulier aliphatique et/ou alcényle et/ou alcynyle et/ou aromatique, W étant, en outre exempt de liaison étheroxyde - O - ;
Δ Z₃ est un radical divalent de formule :
- U-CₙH₂ₙ -
• avec n ≥ 1 et U = O, S, NH, NHSO₂, de préférence O ;
Δ et Rf étant un radical halogéné - de préférence fluoré - et plus préférentiellement encore un radical fluoroalkyle linéaire ou ramifié répondant à l'une des formules suivantes :
- C_{q}F_{2q} - CF₃
avec q ≥ 0,
- C_{q}F_{2q} - H
avec q ≥ 1 ;
- NR^{rf}SO₂ Cq F₂q - CF₃
avec q ≥ 0 et R^{rf} = H, aryle, ou alkyle inférieur en C₁-C₆ linéaire ou ramifié (de préférence CH₃);
- NR^{rf}SO₂ Cq F₂q - H
avec q ≥ 1 et R^{rf} tel que défini supra ;

2. POS selon la revendication 1, **caractérisés en ce qu'**ils répondent à la formule suivante (I.1) : 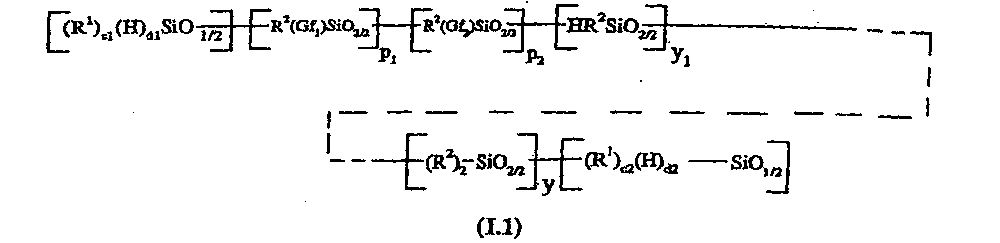 avec
□ R¹, R² = méthyle, propyle ou butyle ;
□ c₁ + d₁ = 3 et, de préférence c₁ = 2, d₁ = 1 c₂ + d₂ = 3 et, de préférence c₂ = 2 d₂ = 1
□ p₁, p₂ ≥ 0 ; p₁ + p₂ ≥ 1 ;
□ 0 ≤ y₁ ≤ 100, de préférence 0 ≤ y₁ ≤ 50 avec la condition selon laquelle si y₁ = 0 alors d1 et/ou d2 = 1 ;
□ 0 ≤ y ≤ 500, de préférence 0 ≤ y ≤ 500 ;
□ Gf₁ = Gf avec h = k 1 et g j = 0 ;
□ Gf₂ = Gf avec h = g = 1, k = 1 ou 2, j = 0 ou 1 et Z₂ = 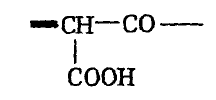 ou :

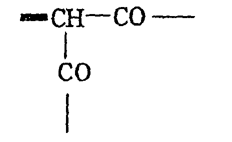

3. POS selon la revendication 2, **caractérisés en ce qu'**ils répondent à la formule **(I.1.1)** suivante : 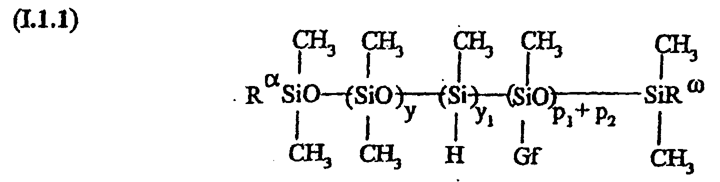 avec y, y₁, p₁, p₂, **Gf** = **Gf**_{**1**} ou **Gf**_{**2**} tels que définis dans la revendication 2 et R^{α}, R^{ω} identiques ou différents et représentant : H ou alkyle en C₁-C₆.

4. POS selon l'une quelconque des revendications 1 à 3, **caractérisés en ce qu'**ils comprennent au moins une espèce (I) et/ou (II) substituée par au moins un reste **Gf** halogéné - de préférence fluoré - choisi dans le sous-groupe de radicaux suivants :
→ 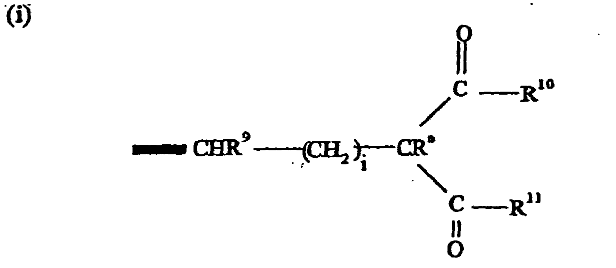 avec
Δ R^{a}, R⁹ indépendamment = H ou alkyle inférieur C₁-C₆ linéaire ou ramifié, de préférence CH₃ ;
Δ R¹⁰, R¹¹ indépendamment = OH, alcoxyle C₁-C₆ linéaire ou ramifié, ou Z₃-Rf ; l'un au moins des radicaux R¹⁰, R¹¹ représentant -Z₃Rf ;
Δ i = 1 à 10, de préférence 1 à 3, et plus préférentiellement encore i = 1 ;
→ 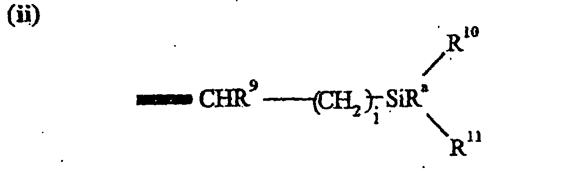 avec R⁹, R^{a}, R¹⁰, R¹¹ et i tels que définis supra ;
→ 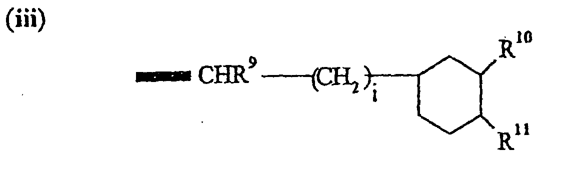 avec R⁹, R¹⁰, R¹¹ et i tels que définis supra ; le cycle hexyle pouvant être éventuellement substitué.
→ et les mélanges des susdits radicaux.

5. POS selon la revendication 4, **caractérisé en ce qu'**ils comprennent au moins une espèce **(I)** et/ou **(II)** substituée par au moins un reste Gf halogéné - de préférence fluoré - répondant à la formule **(i), (ii)** ou **(iii)** selon la revendication 4,
les radicaux R¹⁰ et R¹¹ de la formule considérée correspondant : 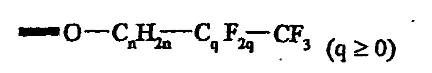 **ou**

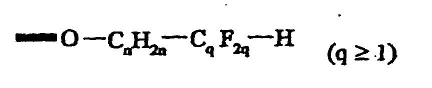

6. POS selon l'une quelconque des revendications 1 à 5, **caractérisés en ce qu'**ils comprennent en outre :
- des motifs siloxyles T = -[R⁸-SiO_{3/2}]- avec les radicaux R⁸ des différents motifs étant identiques ou différents et répondant à la même définition que R¹, R² et **Gf,** donnée supra (revendications 1 et 4 notamment) ;
- et éventuellement des motifs Q = [SiO_{4/2}].

7. Procédé de préparation des POS halogénés - de préférence fluorés - selon l'une quelconque des revendications 1 à 6, **caractérisé en ce qu'**il consiste essentiellement à faire réagir :
- A → au moins une huile polyalkylhydrogénosiloxane - de préférence polyméthylhydrogénosiloxane - ;
- B → avec au moins une oléfine halogénée - de préférence fluorée - précurseur de Gf₁ tel que défini dans la revendication 2 et de formule Gf₁ₚ :
Z₁ₚ Rf
dans laquelle :
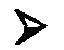 Z₁ₚ = précurseur oléfinique de Z₁,
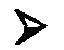 Rf tel que défini dans la revendication 1,
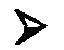 et avec m > 2 dans Z₁ ;
- C → en présence d'une quantité efficace de catalyseur métallique d'hydrosilylation, de préférence à base de platine.

8. Procédé selon la revendication 7, **caractérisé en ce que** l'on fait réagir l'huile A - avec :
- B'→ avec au moins une oléfine halogénée - de préférence fluorée - précurseur de Gf₁ tel que défini dans la revendication 2 et de formule Gf₁ₚ :
Z_{1P}Rf
dans laquelle :
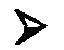 Z₁ₚ = précurseur oléfinique de Z₁,
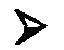 Rf tel que défini supra,
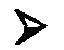 et avec m = 2 dans Z₁ ;
- D → avec au moins une oléfine de formule :
Z₁ₚ Z₂ₚ
dans laquelle Z₁ₚ = précurseur oléfinique de Z₁ et Z₂ₚ = précurseur de Z₂ ;
- B → et avec le réactif B selon la revendication 7 ;
- C → en présence, d'une quantité efficace de catalyseur métallique d'hydrosilylation, de préférence à base de cobalt et/ou de platine ;
le produit réactionnel A + B' + D et/ou B étant mis en présence d'un réactif E :
- E → du type Z₃ₚ Rf avec Z₃ₚ = précurseur de Z₃ et Rf tel que défini supra, pour former un (ou des) radical(aux) **Gf**_{**2**}.

9. Procédé selon la revendication 7 ou la revendication 8, **caractérisé en ce que** l'on fait réagir l'huile A avec :
- D' → avec au moins un oléfine de formule Z₁ₚ Z₂ₚ, dans laquelle :
Z₁ₚ = précurseur oléfinique de Z₁
Z₂ₚ = précurseur oléfinique de Z₂ ;
- C → en présence d'une quantité efficace de catalyseur métallique d'hydrosilylation, de préférence à base de platine
le produit réactionnel A + D'étant, éventuellement, mis en présence d'un réactif :
- E' → du type Z3p Rf avec Z3p = précurseur de Z3 et Rf tel que défini supra, pour former un (ou des) radical(aux) **Gf**_{**2**}.

10. Procédé de préparation de POS halogénés - de préférence fluorés - cycliques ou linéaires, selon l'une quelconque des revendications 1 à 6, **caractérisé en ce qu'**il consiste essentiellement à faire réagir :
- A → au moins une huile polyalkylhydrogénosiloxane - de préférence polyméthylhydrogénosiloxane - ,
- F → avec au moins une oléfine halogénée - de préférence fluorée - précurseur de **Gf** et de formule (**Gf**_{**p**}) : 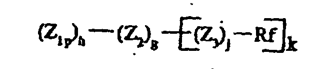 dans laquelle :
• Z₁ₚ est le précurseur oléfinique du radical Z₁ tel que défini supra dans la revendication 1,
• Z₂, Z₃, Rf, h, g, j et k sont également définis dans cette revendication 1,
• avec les conditions selon lesquelles :
* si k = h = 1 et m =2, alors g = 1 et Z₂ est tel que défini supra dans la revendication 1
- C → en présence d'une quantité efficace de catalyseur métallique d'hydrosilylation, de préférence, à base de platine.

11. Procédé selon la revendication 10, **caractérisé en ce que** le précurseur Gfp de Gf répond à l'une des formules suivantes : 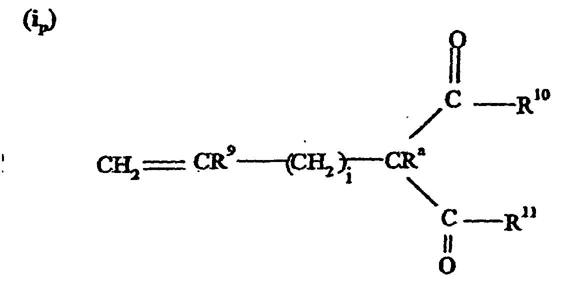 avec
Δ R^{a}, R⁹ indépendamment = H ou alkyle inférieur C₁-C₆ linéaire ou ramifié, de préférence CH₃ ;
Δ R¹⁰, R¹¹ indépendamment = OH, alcoxyle C₁-C₆ linéaire ou ramifié, ou Z₃-Rf ; l'un au moins des radicaux R¹⁰, R¹¹ représentant Z₃Rf ;
Δ i = 0 à 10, de préférence 0 à 3, et plus préférentiellement encore i = 1 ; 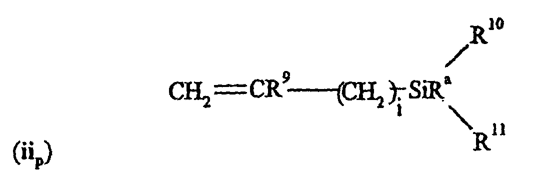 avec R⁹, R^{a}, R¹⁰, R¹¹ et i tels que définis supra ; 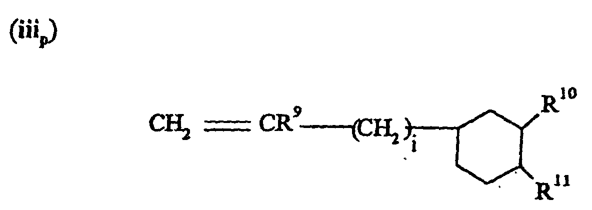 avec R⁹, R¹⁰, R¹¹ et i tels que définis supra ; le cycle hexyle pouvant être éventuellement substitué.

12. Procédé selon la revendication 11, **caractérisé en ce que** les précurseurs **Gfp** des greffons **Gf** présentent un ou deux groupements R¹⁰, R¹¹ perfluorés (R¹⁰ et/ou R¹¹ = Z₃Rf) et sont obtenus par mise en réaction selon un mécanisme de transestérification :
→ d'au moins un composé à hydrogène mobile constitué par le radical Z₃Rf hydrogéné, i.e. : H-Z₃Rf, selon la revendication 1, de préférence un alcool ou un thiol ;
→ avec des produits de départ formés par des composés de formule **(i**_{**p**}**), (ii**_{**p**}**)** ou **(iii**_{**p**}**)** tels que définis dans la revendication 11 et dans lesquels au moins l'un des radicaux R¹⁰, R¹¹ est un alcoxyle linéaire ou ramifié en C₁-C₆.

13. Intermédiaire réactionnel (synthon) susceptible d'être mis en oeuvre, notamment dans le procédé selon les revendications 10, 11 ou 12, **caractérisé en ce qu'**il répond à au moins l'une des formules suivantes : 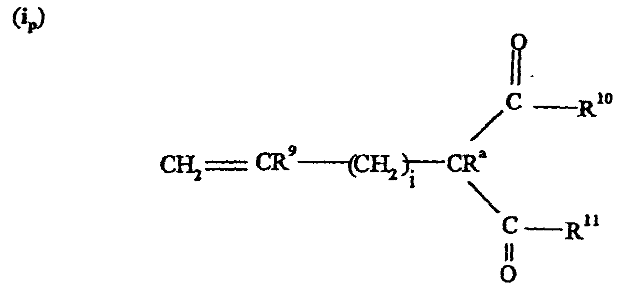 avec R^{a}, R⁹ indépendamment = H ou alkyle inférieur C₁-C₆ linéaire ou ramifié, de préférence CH₃ ;
au moins l'un des radicaux R¹⁰, R¹¹ correspond à un alcoxyle linéaire ou ramifié en C₁-C₆, le méthoxyle et l'éthoxyle et le propyle étant préférés ; 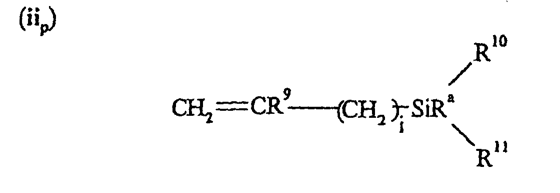 avec R⁹, R^{a}, R¹⁰, R¹¹ et i tels que définis supra ; 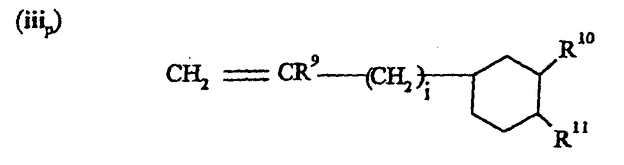 avec R⁹, R¹⁰, R¹¹ et i tels que définis supra le cycle hexyle pouvant être éventuellement substitué.

14. Procédé selon la revendication 8 ou 9, **caractérisé**
. **en ce qu'**au moins une partie des précurseurs Z₂ₚ de Z₂ greffés sur l'huile - A - sont des anhydrides d'acide,
. **en ce que** l'on soumet au moins une partie de ces fonctions anhydrides, à une hydrolyse de manière à générer des extrémités carboxyliques libres,
. et **en ce que** l'on estérifie au moins une partie desdites extrémités carboxyliques à l'aide de réactifs du type Z₃ₚ - Rf, Z₃ₚ étant un précurseur de Z₃, Z₃ et Rf étant tels que définis dans la revendication 1.

15. Procédé selon l'une quelconque des revendications 7 à 11 et 14, **caractérisé en ce que** la réaction entre les radicaux -Z₂ₚ et Z₃ₚ est une estérification, Z₂ₚ étant de préférence de nature acide et Z₃ₚ étant avantageusement de type ester.

16. Emulsion aqueuse **caractérisée en ce qu'**elle contient :
- au moins un POS selon l'une quelconque des revendications 1 à 6 ou obtenus par le procédé selon l'une quelconque des revendications 7 à 12, 14, 15 ;
- de l'eau ;
- et au moins un tensioactif.

17. Application des POS selon l'une quelconque des revendications 1 à 6 ou obtenus par le procédé selon l'une quelconque des revendications 7 à 12, 14, 15 à titre :
- d'anti-mousse,
- de lubrifiant,
- d'agent antiadhérent,
- d'agent abaisseur de tension de surface,
- d'agent antisalissures,
- d'agent oléophobe et/ou hydrophobe
- ou de matière première pour la réalisation d'élastomères ou de films résistant aux agressions chimiques et aux solvants.

18. Composition antisalissure **caractérisée, en ce qu'**elle comprend :
- au moins un POS selon l'une quelconque des revendications 1 à 6 ou obtenus par le procédé selon l'une quelconque des revendications 7 à 12, 14, 15 ;
- et/ou au moins une émulsion selon la revendication 16,
- le ou les susdits POS mis en oeuvre étant de préférence des POS porteurs : de greffons bifonctionnalisés par des radicaux halogénés-perfluorés - tels que définis dans la revendication 5,
* éventuellement de greffons monofonctionnalisés par des radicaux halogénés - fluorés ― eux aussi définis dans la revendication 5,
* et éventuellement d'autres greffons fonctionnalisés par d'autres fonctions que les fonctions bi ou monohalogénées - fluorées.

## Claims

1. Halogenated - preferably fluorinated - polyorganosiloxanes (POS) comprising species of general formulae (I) and/or (II) below: 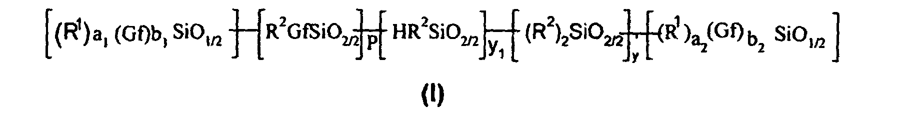 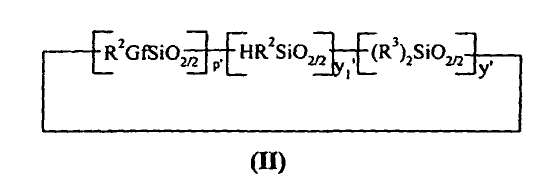 in which:
· a₁ + b₁ = 3; a₂ + b₂ = 3; a, a₂ = 2 or 3; b₁, b₂ = 0 or 1;
1 ≤ p ≤ 200, preferably I ≤ p ≤ 90;
0 ≤ y₁ ≤ 10, preferably 1 ≤ y₁ ≤ 5;
0 ≤ y ≤ 100, preferably 0 ≤ y ≤ 50;
where 5 ≤ p + y₁ + y ≤ 200, preferably 10 ≤ p + y₁ + y ≤ 100,
and [p/(p + y + y₁ + 2)].100 ≥ 3, preferably ≥ 5;
· 1 ≤ p' ≤ 9, preferably 1 ≤ p' ≤ 4.5;
· 0 ≤ y'₁ ≤ 1, preferably 0 ≤ y'₁ ≤ 0.25;
· 0 ≤ y' ≤ 5, preferably 0 ≤ y' ≤ 0.5;
· each radical R¹, R² on the one hand is identical to or different from like radicals with the same superscripts and identical to or different from the other radical with a different superscript, and on the other hand is a linear or branched C₁-C₁₂ - preferably C₁-C₆ - (cyclo)alkyl group, a hydrocarbon group and advantageously an aryl, an aralkyl or an alkylaryl, these groups optionally being substituted; and
· Gf:
- is a halogenated - preferably fluorinated - functional monovalent radical of an identical or different nature in the p or p' siloxy units D and/or the two siloxy units M in which it is present;
- and has the average formula below: 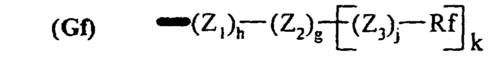
Δ where h = 1; g = 0 or 1; j = 0 or 1 and k = 1 or 2;
Δ with the proviso that at least one radical Gf in which k ≠ 0 is present in said POS (I) or (II);
Δ Z₁ being a divalent radical of the formula 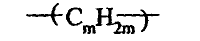 where m ≥ 2,
with the proviso that if m = 2, then at least some of the radicals Gf are radicals in which g ≠ 0;
and it optionally being possible for at least one of the hydrogens substituting the carbons of Z₁ to be replaced by a linear or branched C₁-C₆ lower alkyl, preferably a methyl;
Δ Z₂ being a divalent or trivalent radical of the formula 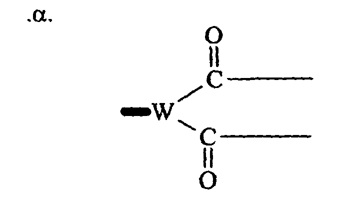
- one or both of the free valences of the carbonyl(s) being joined to -Z₃Rf and, in the case where only one of said free valences is joined to -Z₃Rf, the other is joined to a hydroxyl; 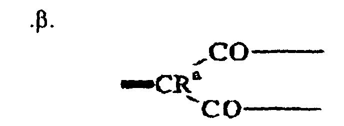
- at least one of the free valences of the carbonyls being joined to -Z₃-Rf and, in the case where only one of these free valences is joined to -Z₃-Rf, the other is joined to a linear or branched C₁-C₆ alkoxy; and
- R^{a} = H, aryl or linear or branched C₁-C₆ lower alkyl, preferably CH₃; 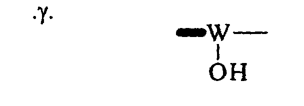 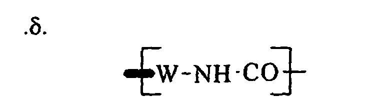 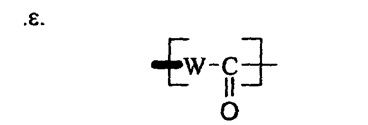 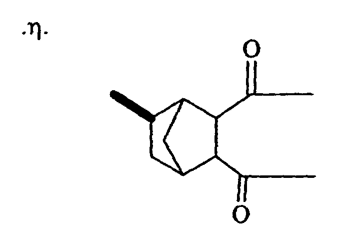
- one or both of the free valences of the carbonyl(s) being joined to -Z₃-Rf and, in the case where only one of said free valences is joined to -Z₃Rf, the other is joined to a hydroxyl or a linear or branched C₁-C₆ alkoxy; 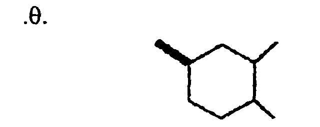
- one and/or other of the two free valences that are different from the valency - being joined to Z₃-Rf and, in the case where only one of these two valences is joined to -Z₃-Rf, the other is joined to OH or a linear or branched C₁-C₆ alkoxy; or 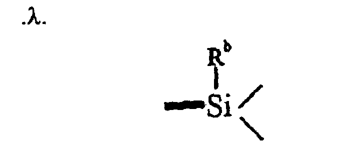
- one and/or other of the two free valences that are different from the valency - being joined to Z₃-Rf and, in the case where only one of these two valences is joined to -Z₃-Rf, the other is joined to OH or a linear or branched C₁-C₆ alkoxy; and
- R^{b} = H or linear or branched C₁-C₆ lower alkyl, methyl being preferred;
→ W being a cyclic or non-cyclic hydrocarbon radical, particularly an aliphatic and/or alkenyl and/or alkynyl and/or aromatic radical, W further being devoid of an ether linkage -O-;
Δ Z₃ being a divalent radical of the formula
- U-CₙH₂ₙ-,
where n ≥ 1 and U = O, S, NH or NHSO₂, preferably O; and
Δ Rf being a halogenated - preferably fluorinated - radical and particularly preferably a linear or branched fluoroalkyl radical having one of the formulae below:
- C_{q}F_{2q}-CF₃,
where q ≥ 0;
- C_{q}F_{2q}-H,
where q ≥ 1;
- NR^{rf}SO₂C_{q}F_{2q}-CF₃,
where q ≥ 0 and R^{rf} = H, aryl or linear or branched C₁-C₆ lower alkyl (preferably CH₃); or
- NR^{rf}SO₂C_{q}F_{2q}-H,
where q ≥ I and R^{rf} is as defined above.

2. POS according to Claim 1, **characterized in that** they have formula (I.1) below: 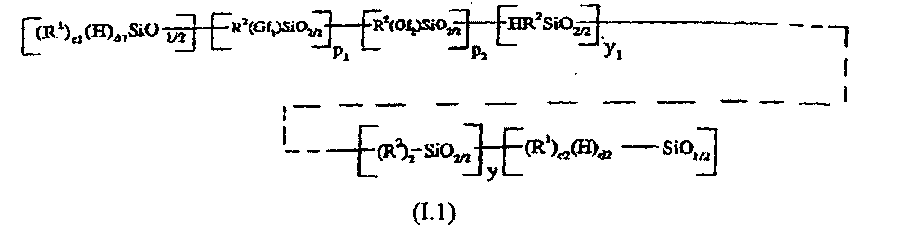 where:
□ R¹, R² = methyl, propyl or butyl;
□ c₁ + d₁ = 3, preferably c₁ = 2, d₁ = 1;
c₂ + d₂ = 3, preferably c₂ = 2, d₂ = 1;
□ p₁, p₂ ≥ 0; p₁ + p₂ ≥ 1;
□ 0 ≤ y₁ ≤ 100, preferably 0 ≤ y₁ ≤ 50, with the proviso that if y₁ = 0, then d₁ and/or d₂ = 1;
□ 0 ≤ y ≤ 500, preferably 0 ≤ y ≤ 500;
□ Gf₁ = Gf where h = k = 1 and g = j = 0;
□ Gf₂ = Gf where h = g = 1, k = 1 or 2, j = 0 or 1 aud Z₂ = 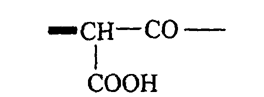 or

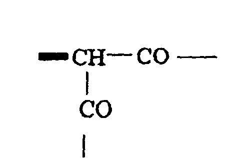

3. POS according to Claim 2, **characterized in that** they have formula (I.1.1) below: 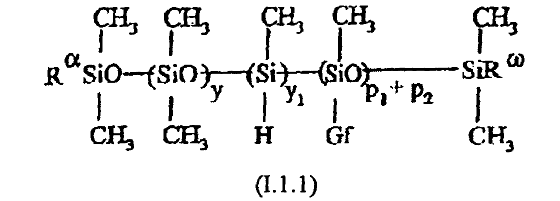 where y, y₁, p₁, p₂ and Gf = Gf₁ or Gf₂ are as defined in Claim 2 and R^{α} and R^{ω} are identical or different and are H or C₁-C₆ alkyl.

4. POS according to any one of Claims 1 to 3, **characterized in that** they comprise at least one species (I) and/or (II) substituted by at least one halogenated - preferably fluorinated - radical Gf selected from the following subgroup of radicals: → 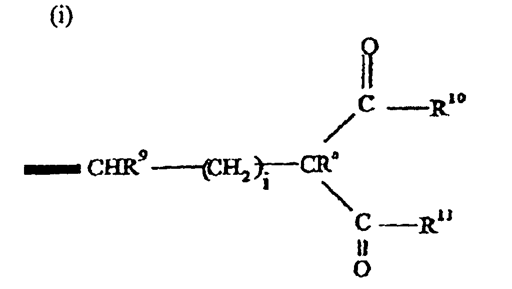 where:
Δ R^{a}, R⁹ independently = H or linear or branched C₁-C₆ lower alkyl, preferably CH₃;
Δ R¹⁰, R¹¹ independently = OH, linear or branched C₁-C₆ alkoxy or Z₃-Rf, at least one of the radicals R¹⁰, R¹¹ being - Z₃Rf;
Δ i = 1 to 10, preferably 1 to 3 and particularly preferably 1;
→ 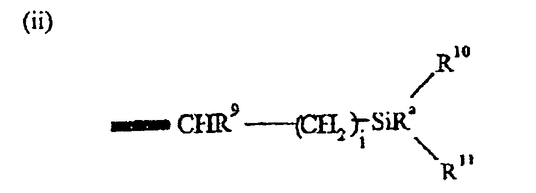 where R⁹, R^{a}, R¹⁰, R¹¹ and i are as defined above;
→ 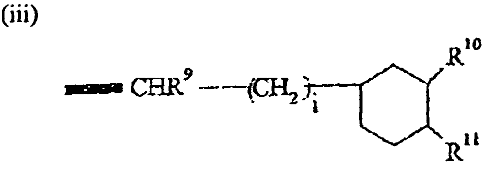 where R⁹, R¹⁰, R¹¹ and i are as defined above, it optionally being possible for the hexyl ring to be substituted.

5. POS according to Claim 4, **characterized in that** they comprise at least one species (I) and/or (II) substituted by at least one halogenated - preferably fluorinated - radical Gf of formula (i), (ii) or (iii) according to Claim 4, the radicals R¹⁰ and R¹¹ in the formula in question being: 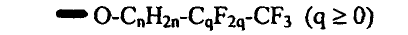 or

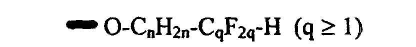

6. POS according to any one of Claims 1 to 5, **characterized in that** they also comprise:
- siloxy units T = -[R⁸-SiO_{3/2}]-, where the radicals R⁸ of the different units are identical or different and are defined in the same way as R¹, R² and Gf above (especially Claims 1 and 4); and
- optionally units Q = [SiO_{4/2}].

7. Process for the preparation of the halogenated - preferably fluorinated - POS according to any one of Claims 1 to 6, **characterized in that** it consists essentially in reacting:
- A → at least one polyalkylhydrogenosiloxane - preferably polymethylhydrogenosiloxane - oil
- B → with at least one halogenated - preferably fluorinated - olefin that is a precursor of Gf₁ as defined in Claim 2 and has the formula Gf₁ₚ:
Z₁ₚRf
in which:
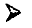 Z₁ₚ = olefinic precursor of Z₁,
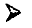 Rf is as defined in Claim 1, and
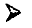 m > 2 in Z₁,
- C → in the presence of an effective amount of a metallic hydrosilylation catalyst preferably based on platinum.

8. Process according to Claim 7, **characterized in that** the oil A is reacted:
- B' → with at least one halogenated - preferably fluorinated - olefin that is a precursor of Gf₁ as defined in Claim 2 and has the formula Gf₁ₚ:
Z₁ₚRf
in which:
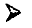 Z₁ₚ = olefinic precursor of Z₁,
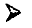 Rf is as defined above, and
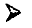 m = 2 in Z₁,
- D → with at least one olefin of the formula
Z₁ₚZ₂ₚ
in which Z₁ₚ = olefinic precursor of Z₁ and Z₂ₚ = precursor of Z₂,
- B → and with the reagent B according to Claim 7,
- C → in the presence of an effective amount of a metallic hydrosilylation catalyst preferably based on cobalt and/or platinum,
the reaction product A + B' + D and/or B being brought into contact with a reagent E:
- E → of the type Z₃ₚRf, where Z₃ₚ = precursor of Z₃ and Rf is as defined above, to form one or more radicals Gf₂.

9. Process according to Claim 7 or Claim 8, **characterized in that** the oil A is reacted:
- D' → with at least one olefin of the formula Z₁ₚZ₂ₚ, in which:
Z₁ₚ = olefinic precursor of Z₁, and
Z₂ₚ = olefinic precursor of Z₂,
- C → in the presence of an effective amount of a metallic hydrosilylation catalyst preferably based on platinum,
the reaction product A + D' optionally being brought into contact with a reagent
- E' → of the type Z₃ₚRf, where Z₃ₚ = precursor of Z₃ and Rf is as defined above, to form one or more radicals Gf₂.

10. Process for the preparation of cyclic or linear, halogenated - preferably fluorinated - POS according to any one of Claims 1 to 6, **characterized in that** it consists essentially in reacting:
- A → at least one polyalkylhydrogenosiloxane - preferably polymethylhydrogenosiloxane - oil
- F → with at least one halogenated - preferably fluorinated - olefin that is a precursor of Gf and has the formula (Gfₚ): 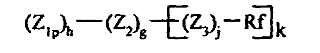 in which:
. Z₁ₚ is the olefinic precursor of the radical Z₁ as defined above in Claim 1, and
. Z₂, Z₃, Rf, h, g, j and k are also defined in said Claim 1,
. with the proviso that:
* if k = h = 1 and m = 2, then g = 1 and Z₂ is as defined above in Claim 1,
- C → in the presence of an effective amount of a metallic hydrosilylation catalyst preferably based on platinum.

11. Process according to Claim 10, **characterized in that** the precursor Gfₚ of Gf has one of the formulae below: 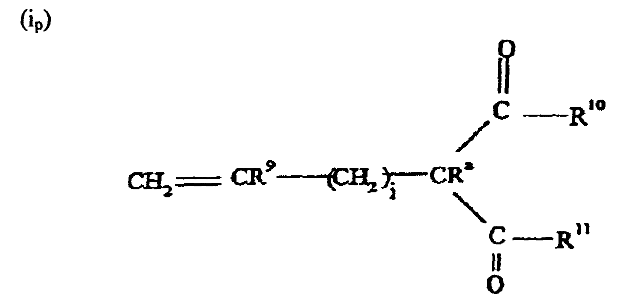 where:
Δ R^{a}, R⁹ independently = H or linear or branched C₁-C₆ lower alkyl, preferably CH₃;
Δ R¹⁰, R¹¹ independently = OH, linear or branched C₁-C₆ alkoxy or Z₃-Rf, at least one of the radicals R¹⁰, R¹¹ being Z₃Rf; and
Δ i = 0 to 10, preferably 0 to 3 and particularly preferably 1; 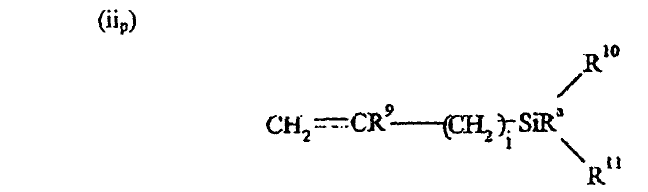
where R⁹, R^{a}, R¹⁰, R¹¹ and i are as defined above; or 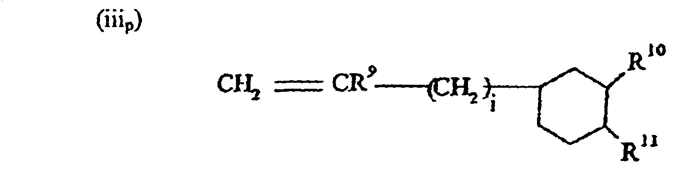 where R⁹, R¹⁰, R¹¹ and i are as defined above, it optionally being possible for the hexyl ring to be substituted.

12. Process according to Claim 11, **characterized in that** the precursors Gfₚ or the grafts Gf have one or two perfluorinated groups R¹⁰, R¹¹ (R¹⁰ and/or R¹¹ = Z₃Rf) and are obtained by reacting:
→ at least one compound with a mobile hydrogen which consists of the hydrogenated radical Z₃Rf, i.e. H-Z₃Rf, according to Claim 1, preferably an alcohol or a thiol,
→ with starting materials comprising compounds of formula (iₚ), (iiₚ) or (iiiₚ) as defined in Claim 11, in which at least one of the radicals R¹⁰, R¹¹ is a linear or branched C₁-C₆ alkoxy,
according to a transesterification mechanism.

13. Reaction intermediate (synthon) capable of being used in particular in the process according to Claim 10, 11 or 12, **characterized in that** it has at least one of the formulae below: 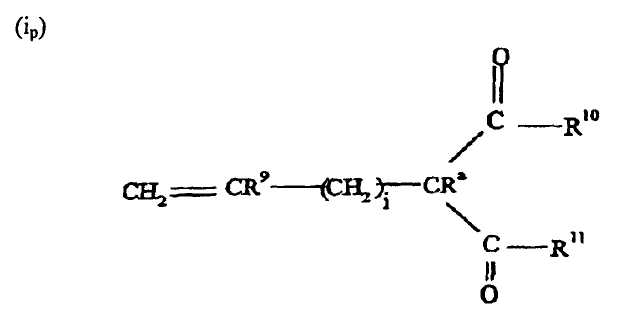 where R^{a}, R⁹ independently = H or linear or branched C₁-C₆ lower alkyl, preferably CH₃; and
at least one of the radicals R¹⁰, R¹¹ is a linear or branched C₁-C₆ alkoxy, preference being given to methoxy, ethoxy and propyl; 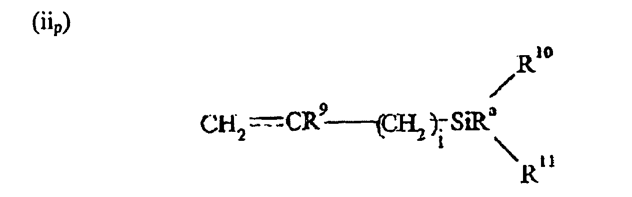 where R⁹, R^{a}, R¹⁰, R¹¹ and i are as defined above; or 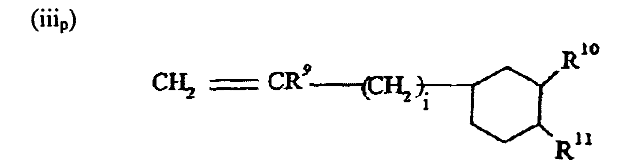 where R⁹, R¹⁰, R¹¹ and i are as defined above, it optionally being possible for the hexyl ring to be substituted.

14. Process according to Claim 8 or 9, **characterized in that**:
· at least some of the precursors Z₂ₚ of Z₂ grafted to the oil A are acid anhydrides,
· at least some of these anhydride groups are subjected to hydrolysis to generate free carboxyl end groups, and
· at least some of said carboxyl end groups are esterified with reagents of the type Z₃ₚ-Rf, Z₃ₚ being a precursor of Z₃, and Z₃ and Rf being as defined in Claim 1.

15. Process according to any one of Claims 7 to 11 and 14, **characterized in that** the reaction between the radicals -Z₂ₚ and Z₃ₚ is an esterification, Z₂ₚ preferably being of an acidic nature and Z₃ₚ advantageously being of the ester type.

16. Aqueous emulsion, **characterized in that** it contains:
- at least one POS according to any one of Claims 1 to 6 or obtained by the process according to any one of Claims 7 to 12, 14 and 15;
- water; and
- at least one surfactant.

17. Application of the POS according to any one of Claims 1 to 6 or obtained by the process according to any one of Claims 7 to 12, 14 and 15 as:
- antifoams,
- lubricants,
- antiadhesives,
- agents for lowering surface tension,
- dirt repellents,
- oleophobic and/or hydrophobic agents, or
- starting materials for the production of elastomers or films resistant to chemical aggressions and solvents.

18. Dirt repelling composition, **characterized in that** it comprises:
- at least one POS according to any one of Claims 1 to 6 or obtained by the process according to any one of Claims 7 to 12, 14 and 15, and/or
- at least one emulsion according to Claim 16,
- said POS used preferably being POS which:
* carry grafts functionalized by halogenated - perfluorinated - radicals as defined in Claim 5,
* optionally carry grafts monofunctionalized by halogenated - fluorinated - radicals also as defined in Claim 5, and
* optionally carry other grafts functionalized by groups other than bihalogenated or monohalogenated - fluorinated - groups.

## Patentansprüche

1. Polyorganosiloxane (POS), die halogeniert, vorzugsweise fluoriert, sind und Spezies mit der allgemeinen Formel (I) und/oder (II) umfassen: 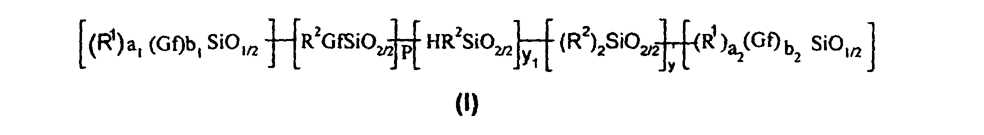 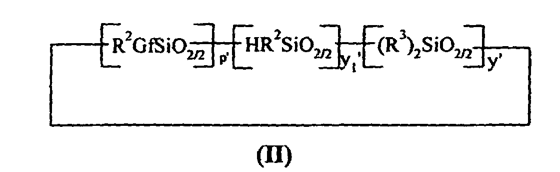 in welchen:
• a₁ + b₁ = 3; a₂ + b₂ = 3; a, a₂ = 2 oder 3; b₁, b₂ = 0 oder 1;
1 ≤ p ≤ 200, vorzugsweise 1 ≤ p ≤ 90;
0 ≤ y₁ ≤ 10, vorzugsweise 1 ≤ y₁ ≤ 5;
0 ≤ y ≤ 100, vorzugsweise 0 ≤ y ≤ 50;
mit 5 ≤ p + y, + y ≤ 200, vorzugsweise 10 ≤ p + y₁ + y ≤ 100 und [p/(p + y + y₁ + 2)] · 100 ≥ 3, vorzugsweise ≥ 5;
• 1 ≤ p' ≤ 9, vorzugsweise 1 ≤ p' ≤ 4,5;
• 0 ≤ y'₁ ≤ 1, vorzugsweise 0 ≤ y'₁ ≤ 0,25;
• 0 ≤ y' ≤ 5, vorzugsweise 0 ≤ y' ≤ 0,5;
• wobei sich jeder Rest R¹ und R² einerseits gegebenenfalls von seinen Analogen mit demselben Exponenten und von dem anderen Rest mit dem anderen Exponenten unterscheidet und andererseits eine geradkettige oder verzweigte C₁- bis C₁₂- und vorzugsweise C₁- bis C₆-(Cyclo-)Alkyl-, eine Kohlenwasserstoff- und vorteilhafterweise eine Arylgruppierung, eine Aralkyl- und Alkylarylgruppierung bedeutet, wobei diese Gruppierungen gegebenenfalls substituiert sind,
• Gf:
- einen, vorzugsweise fluorierten, halogenierten einwertigen Rest bedeutet, dessen Charakter sich gegebenenfalls in den p- oder p'-Siloxyleinheiten D und/oder den zwei Siloxyleinheiten M, in welchen er vorhanden ist, unterscheidet, und
- folgende mittlere Formel besitzt: 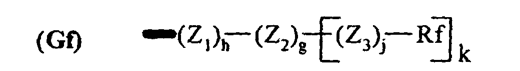
Δ mit h = 1, g = 0, 1, j = 0, 1 und k = 1 oder 2,
Δ unter der Bedingung, dass wenigstens ein Gf-Rest, in welchem k ≠ 0 ist, in POS (I) oder (II) vorhanden ist,
Δ Z₁ einen zweiwertigen Rest bedeutet mit der Formel: 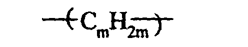 mit m ≥ 2,
unter der Bedingung, dass, wenn m = 2, mindestens ein Teil der Reste Gf Reste sind, in welchen g ≠ 0, und
mindestens eines der Wasserstoffatome, das die Kohlenstoffatome von Z₁ substituiert, gegebenenfalls durch einen geradkettigen oder verzweigten niederen C₁― bis C₆-Alkylrest und vorzugsweise einen Methylrest ersetzt werden kann,
Δ Z₂ einen zwei- oder dreiwertigen Rest bedeutet mit den Formeln: 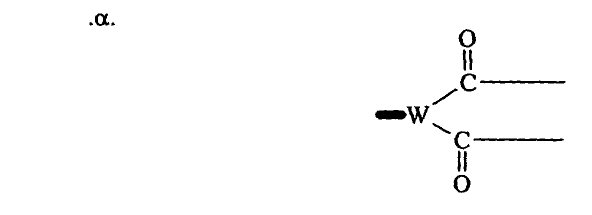
- wobei die eine oder beide freie Wertigkeiten (der) Carbonylgruppe(n) mit - Z₃Rf verknüpft ist (sind), und, wenn nur eine der freien Wertigkeiten mit - Z₃Rf verknüpft ist, die andere mit einem Hydroxylrest verknüpft ist, 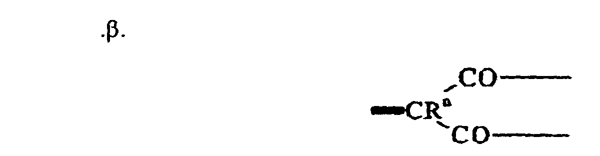
• wobei mindestens eine der freien Wertigkeiten der Carbonylgruppen mit -Z₃-Rf verknüpft ist, und, wenn nur eine dieser freien Wertigkeiten mit -Z₃-Rf verknüpft ist, die andere mit einem geradkettigen oder verzweigten C₁- bis C₆-Alkoxylrest verknüpft ist,
• R^{a} = H, einen Arylrest oder einen geradkettigen oder verzweigten niederen C₁- bis C₆-Alkylrest und vorzugsweise CH₃ bedeutet, 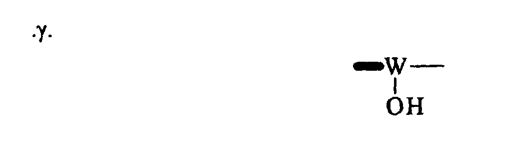 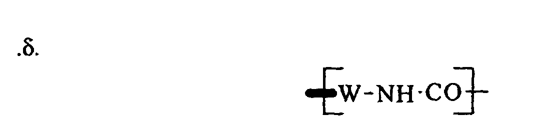 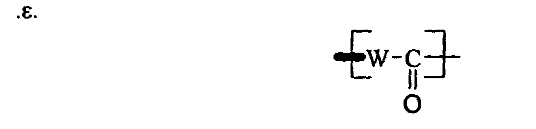 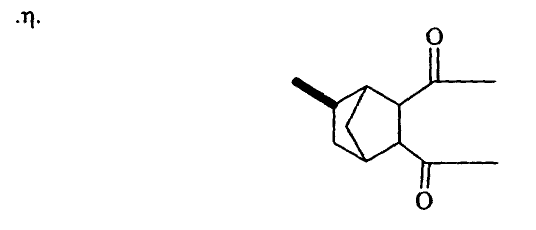
• wobei die eine oder beide freie Wertigkeiten der Carbonylgruppe(n) mit -Z₃-Rf verknüpft sind, und, wenn nur eine der freien Wertigkeiten mit -Z₃-Rf verknüpft ist, die andere mit einem Hydroxylrest oder einem geradkettigen oder verzweigten C₁- bis C₆-Alkoxyrest verknüpft ist, 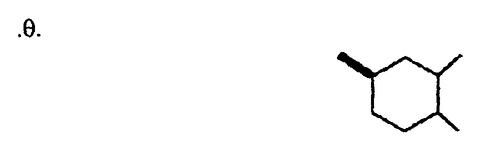
• wobei die eine und/oder die andere der zwei freien Wertigkeiten, die nicht die Wertigkeit - sind, mit Z₃-Rf verknüpft ist (sind), und, wenn nur eine der beiden Wertigkeiten mit -Z₃-Rf verknüpft ist, die andere mit OH oder einem geradkettigen oder verzweigten C₁- bis C₆-Alkoxylrest verknüpft ist, 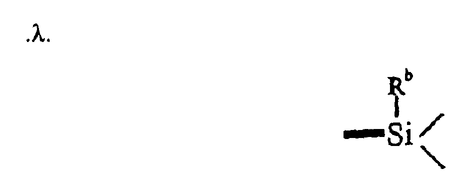
• wobei die eine und/oder die andere der beiden freien Wertigkeiten, die nicht die Wertigkeit ― sind, mit Z₃―Rf verknüpft ist (sind), und, wenn nur eine der beiden Wertigkeiten mit -Z₃-Rf verknüpft ist, die andere mit OH oder einem geradkettigen oder verzweigten C₁― bis C₆-Aloxylrest verknüpft ist,
• R^{b} = H oder einen geradkettigen oder verzweigten niederen C₁― bis C₆-Alkylrest bedeutet, wobei der Methylrest bevorzugt ist,
→ W einen gegebenenfalls cyclischen Kohlenwasserstoffrest, insbesondere aliphatischen und/oder Alkenylrest und/oder Alkinylrest und/oder aromatischen Rest bedeutet und außerdem keine Etheroxid-Bindung, -O-, enthält,
Δ Z₃ einen zweiwertigen Rest mit der Formel
- U-CₙH₂ₙ-,
• wobei n ≥ 1 und U = O, S, NH, NHSO₂ und vorzugsweise O, und
Δ Rf einen, vorzugsweise fluorierten, halogenierten Rest und insbesondere einen geradkettigen oder verzweigten Fluoralkylrest bedeutet, der eine der folgenden Formeln besitzt:
-C_{q}F_{2q}-CF₃
mit q ≥ 0,
-C_{q}F_{2q}-H
mit q ≥ 1,
-NR^{rf}SO₂C_{q}F_{2q}-CF₃
mit q ≥ 0 und R^{rf} = H, ein Arylrest oder geradkettiger oder verzweigter niederer C₁― bis C₆-Alkylrest (vorzugsweise CH₃) und
-NR^{rf}SO₂C_{q}F_{2q} - H,
mit q ≥ 1 und R^{rf} wie zuvor definiert.

2. POS nach Anspruch 1, **dadurch gekennzeichnet, dass** sie die Formel (I.1) besitzen: 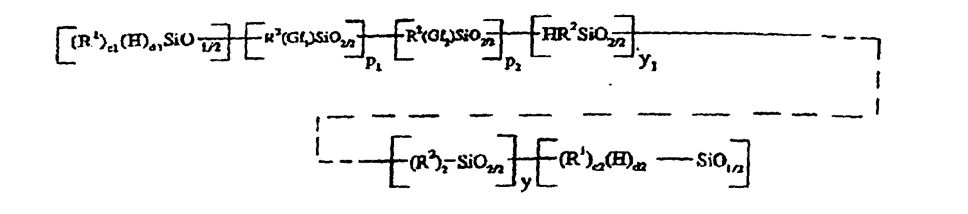 wobei
□ R¹, R² = Methyl, Propyl oder Butyl,
□ c₁ + d₁ = 3 und vorzugsweise c₁ = 2, d₁ = 1
c₂ + d₂ = 3 und vorzugsweise c₂ = 2 d₂ = 1,
□ p₁, p₂ ≥ 0, p₁ + p₂ ≥ 1,
□ 0 ≤ y₁ ≤ 100 und vorzugsweise 0 ≤ y₁ ≤ 50, unter der Bedingung, dass, wenn y₁ = 0, d₁ und/oder d₂ = 1,
□ 0 ≤ y ≤ 500 und vorzugsweise 0 ≤ y ≤ 500,
□ Gf₁ = Gf, wobei h = k = 1 und g = j = 0,
□ Gf₂ = Gf, wobei h = g = 1, k = 1 oder 2, j = 0 oder 1 und Z₂ = 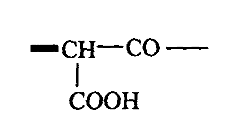 oder

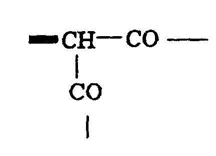

3. POS nach Anspruch 2, **dadurch gekennzeichnet, dass** sie die Formel (I.1.1) besitzen: 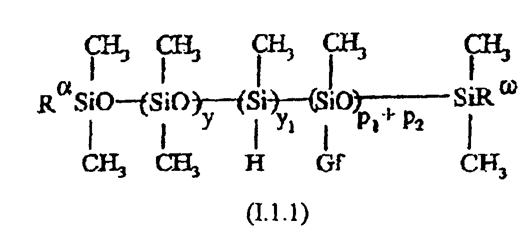 wobei y, y₁, p₁, p₂, Gf = Gf₁ oder Gf₂ wie in Anspruch 2 definiert und R^{α}, R^{ω} gegebenenfalls voneinander verschieden sind und H oder einen C₁- bis C₆-Alkylrest bedeuten.

4. POS nach einem der Ansprüche 1 bis 3, **dadurch gekennzeichnet, dass** sie mindestens eine Spezies (I) und/oder (II) umfassen, die durch mindestens einen, vorzugsweise fluorierten, halogenierten Rest Gf substituiert ist, der aus der Untergruppe aus folgenden Resten ausgewählt ist: 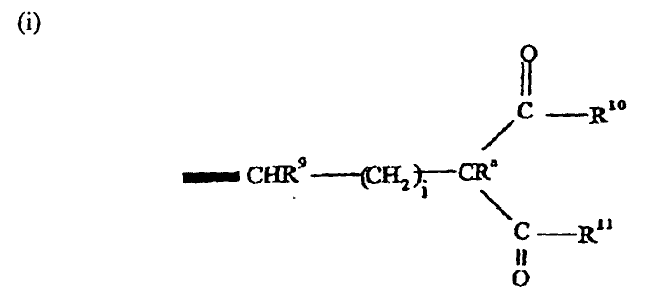 wobei
Δ R^{a}, R⁹ unabhängig voneinander = H oder einen geradkettigen oder verzweigten niederen C₁― bis C₆-Alkylrest und vorzugsweise CH₃ und
Δ R¹⁰, R¹¹ unabhängig voneinander = OH, einen geradkettigen oder verzweigten C₁― und C₆-Alkoxylrest oder Z₃―Rf bedeuten, wobei mindestens einer der Reste R¹⁰, R¹¹ - Z₃Rf bedeutet,
Δ i = 1 bis 10, vorzugsweise 1 bis 3, und besonders bevorzugt i = 1,
→ 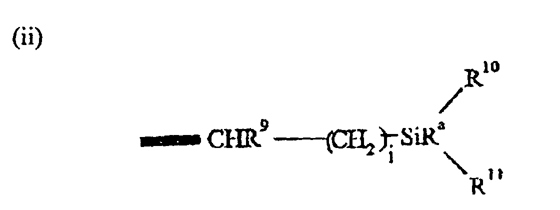 wobei R⁹, R^{a}, R¹⁰, R¹¹ und i wie zuvor definiert sind,
→ 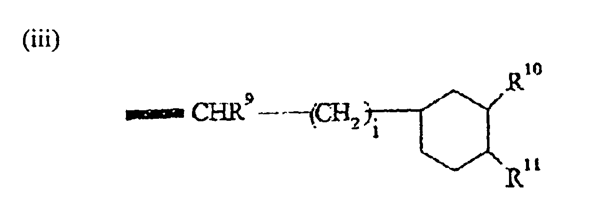 wobei R⁹, R¹⁰, R¹¹ und i wie zuvor definiert sind und der Hexylcyclus gegebenenfalls substituiert sein kann, und
→ und die Gemische dieser Reste.

5. POS nach Anspruch 4, **dadurch gekennzeichnet, dass** sie mindestens eine Spezies (I) und/oder (II) umfassen, die substituiert ist durch mindestens einen, vorzugsweise fluorierten, halogenierten Rest Gf, der die Formel (i), (ii) oder (iii) gemäß Anspruch 4 besitzt, wobei
die Reste R¹⁰ und R¹¹ mit der jeweiligen Formel entsprechen: 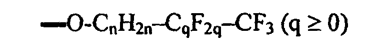 oder

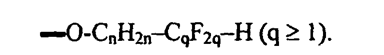

6. POS nach einem der Ansprüche 1 bis 5, **dadurch gekennzeichnet, dass** sie außerdem umfassen:
- siloxylierte Grundeinheiten T = -[R⁸-SiO_{3/2}]-, wobei die Reste R⁸ der einzelnen Grundeinheiten gegebenenfalls voneinander verschieden sind und der weiter oben gegebenen Definition für R¹, R² und Gf entsprechen (insbesondere Ansprüche 1 und 4), und
- gegebenenfalls Grundeinheiten Q = [SiO_{4/2}].

7. Verfahren zur Herstellung vorzugsweise fluorierter halogenierter POS nach einem der Ansprüche 1 bis 6, **dadurch gekennzeichnet, dass** es im Wesentlichen darin besteht:
- A → mindestens ein Polyalkylwasserstoffsiloxanöl, vorzugsweise Polymethylwasserstoffsiloxan, mit
- B → mindestens einem, vorzugsweise fluorierten, halogenierten Olefinvorläufer für Gf₁ wie in Anspruch 2 definiert und mit der Formel Gf₁ₚ:
Z₁ₚRf
in welcher:
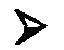 Z₁ₚ = olefinischer Vorläufer für Z₁,
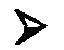 Rf wie in Anspruch 1 definiert und
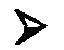 mit m > 2 in Z₁ ist,
- C → in Gegenwart einer wirksamen Menge eines metallischen Hydrosilylierungskatalysators, vorzugsweise auf der Basis von Platin,
umzusetzen.

8. Verfahren nach Anspruch 7, **dadurch gekennzeichnet, dass** das Öl -A-
- B' → mit mindestens einem, vorzugsweise fluorierten, halogenierten Olefinvorläufer für Gf₁ wie in Anspruch 2 definiert und mit der Formel Gf_{1p:}
Z₁ₚRf
in welcher
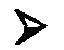 Z₁ₚ = olefinischer Vorläufer für Z₁,
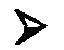 Rf wie zuvor definiert und
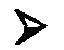 mit m = 2 in Z₁ ist,
- D → mit mindestens einem Olefin mit der Formel:
Z₁ₚZ₂ₚ
in welcher Z₁ₚ = olefinischer Vorläufer für Z₁ und Z₂ₚ = Vorläufer für Z₂ und
- B → mit dem Reaktanten B nach Anspruch 7,
- C → in Gegenwart einer wirksamen Menge eines metallischen Hydrosilylierungskatalysators, vorzugsweise auf der Basis von Cobalt und/oder Platin umgesetzt wird,
wobei das Reaktionsprodukt A + B' + D und/oder B mit einem Reaktanten E in Berührung gebracht wird:
- E → vom Typ Z₃ₚRf, wobei Z₃ₚ = Vorläufer für Z₃ und Rf wie weiter oben definiert, um einen oder mehrere Reste Gf₂ zu bilden.

9. Verfahren nach Anspruch 7 oder 8, **dadurch gekennzeichnet, dass** das Öl A
- D' → mit mindestens einem Olefin mit der Formel Z₁ₚZ₂ₚ, in welcher:
Z₁ₚ = olefinischer Vorläufer für Z₁ und
Z₂ₚ = olefinischer Vorläufer für Z₂,
- C → in Gegenwart einer wirksamen Menge eines metallischen Hydrosilylierungskatalysators, vorzugsweise auf der Basis von Platin, umgesetzt wird und das Reaktionsprodukt A + D' gegebenenfalls in Berührung gebracht wird mit einem Reaktanten:
- E' → vom Typ Z₃ₚRf, wobei Z₃ₚ = Vorläufer für Z₃ und Rf wie zuvor definiert ist, um einen oder mehrere Reste Gf₂ zu bilden.

10. Verfahren zur Herstellung, vorzugsweise fluorierter, halogenierter cyclischer oder geradkettiger POS nach einem der Ansprüche 1 bis 6, **dadurch gekennzeichnet, dass** es im Wesentlichen darin besteht:
- A → mindestens ein Polyalkylwasserstoffsiloxanöl, vorzugsweise Polymethylwasserstoffsiloxan, mit
- F → mindestens einem, vorzugsweise fluorierten, halogenierten Olefinvorläufer für Gf mit der Formel (Gfₚ)
(Z₁ₚ)ₕ-(Z₂)_{g}-[(Z₃)ⱼ-Rf]ₖ
in welcher:
• Z₁ₚ den olefinischen Vorläufer für den Rest Z₁ wie weiter oben in Patentanspruch 1 definiert bedeutet und
• Z₂, Z₃, Rf, h, g, j und k wie in Anspruch 1 definiert sind,
• unter der Bedingung, dass:
* wenn k = h = 1 und m = 2, g = 1 und Z₂ wie weiter oben in Patentanspruch 1 definiert ist,
- C → in Gegenwart einer wirksamen Menge eines metallischen Hydrosilylierungskatalysators, vorzugsweise auf der Basis von Platin,
umzusetzen.

11. Verfahren nach Anspruch 10, **dadurch gekennzeichnet, dass** der Vorläufer Gfp von Gf eine der folgenden Formeln besitzt: 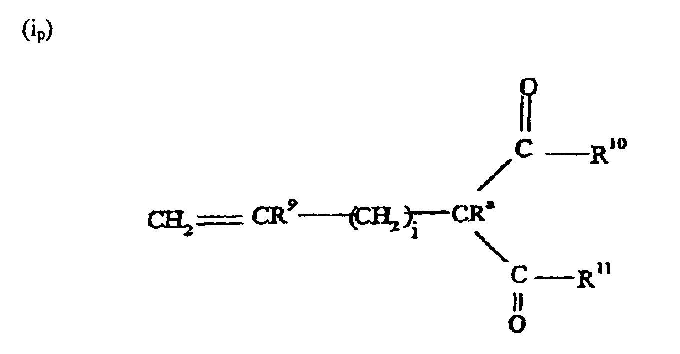 wobei
Δ R^{a}, R⁹ unabhängig voneinander = H oder einen geradkettigen oder verzweigten niederen C₁- bis C₆-Alkylrest und vorzugsweise CH₃ bedeuten,
Δ R¹⁰, R¹¹ unabhängig voneinander = OH, einen geradkettigen oder verzweigten C₁bis C₆-Alkoxylrest oder Z₃-Rf bedeuten und mindestens einer der Reste R¹⁰, R¹¹ Z₃Rf bedeutet und
Δ i = 0 bis 10, vorzugsweise 0 bis 3, und besonders bevorzugt i = 1, 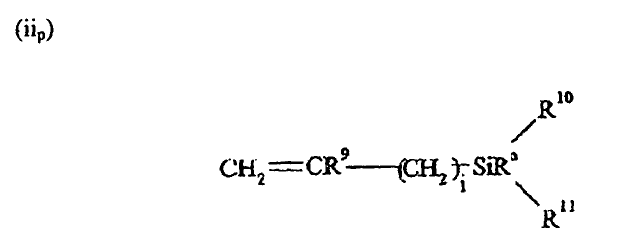 wobei R⁹, R^{a}, R¹⁰, R¹¹ und i wie zuvor definiert sind, 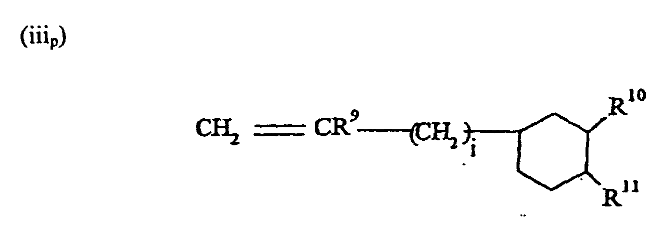 wobei R⁹, R¹⁰, R¹¹ und i wie zuvor definiert sind und der Hexylcyclus gegebenenfalls substituiert sein kann.

12. Verfahren nach Anspruch 11, **dadurch gekennzeichnet, dass** die Vorläufer Gfₚ der Pfropf-Substituenten Gf eine oder zwei perfluorierte Gruppen R¹⁰ und R¹¹ (R¹⁰ und/oder R¹¹ = Z₃Rf) bedeuten und erhalten worden sind durch eine Umsetzung gemäß einer Umesterung
→ mindestens einer Verbindung mit einem beweglichen Wasserstoffatom, die aus dem hydrierten Rest Z₃Rf, d.h. H―Z₃Rf nach Anspruch 1, und vorzugsweise einem Alkohol oder Thiol besteht,
→ mit Ausgangsstoffen, die von Verbindungen mit der Formel (iₚ), (iiₚ) oder (iiiₚ), wie in Anspruch 11 definiert, gebildet sind und in welchen mindestens einer der Reste R¹⁰ und R¹¹ einen geradkettigen oder verzweigten C₁― bis C₆-Alkoxylrest bedeutet.

13. Zwischenprodukt, das insbesondere in dem Verfahren nach den Ansprüchen 10, 11 oder 12 verwendet werden kann, **dadurch gekennzeichnet, dass** es mindestens eine der folgenden Formeln besitzt: 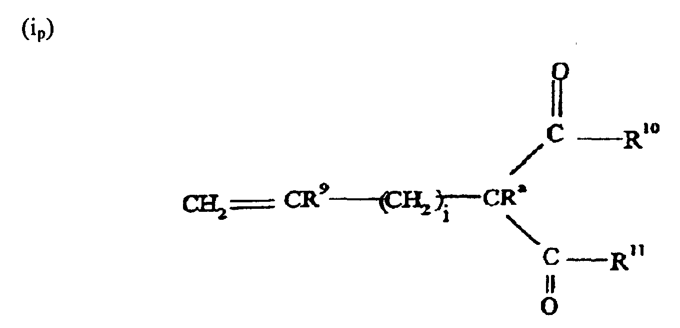 wobei R^{a} und R⁹ unabhängig voneinander = H oder einen geradkettigen oder verzweigten niederen C₁― bis C₆-Alkylrest und vorzugsweise CH₃ bedeuten und mindestens einer der Reste R¹⁰ und R¹¹ einen Alkoxylrest bedeutet, dessen C₁― bis C₆-Teil geradkettig oder verzweigt ist, wobei Methoxyl und Ethoxyl und Propyl bevorzugt sind, 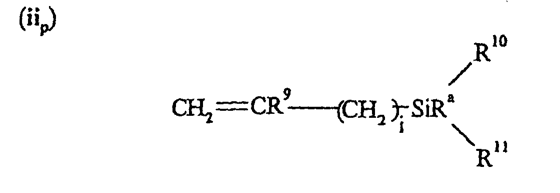 wobei R⁹, R^{a}, R¹⁰, R¹¹ und i wie weiter oben definiert sind, 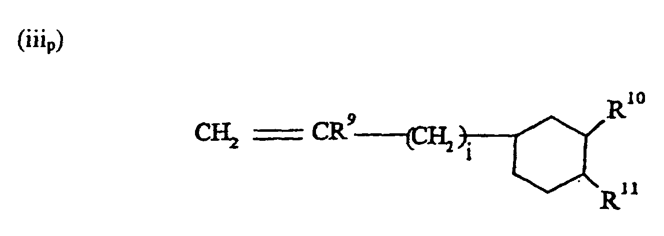 wobei R⁹, R¹⁰, R¹¹ und i wie weiter oben definiert sind und der Hexylcyclus gegebenenfalls substituiert sein kann.

14. Verfahren nach Anspruch 8 oder 9, **dadurch gekennzeichnet, dass**
- mindestens ein Teil der Vorläufer Z₂ₚ von Z₂, die auf das Öl -A- gepfropft sind, Säureanhydride sind,
- mindestens ein Teil dieser Anhydridfunktionen einer Hydrolyse derart unterworfen wird, dass freie Carboxylenden erzeugt werden, und
- mindestens ein Teil dieser Carboxylenden mit Reaktanten des Typs Z₃ₚ-Rf, wobei Z₃ₚ ein Vorläufer für Z₃ ist und Z₃ und Rf wie in Anspruch 1 definiert sind, verestert wird.

15. Verfahren nach einem der Ansprüche 7 bis 11 und 14, **dadurch gekennzeichnet, dass** die Reaktion der Reste -Z₂ₚ mit Z₃ₚ eine Veresterung ist, wobei Z₂ₚ vorzugsweise einen sauren Charakter hat und Z₃ₚ vorteilhafterweise ein Ester ist.

16. Wässrige Emulsion, **dadurch gekennzeichnet, dass** sie:
- mindestens ein POS nach einem der Ansprüche 1 bis 6 oder durch das Verfahren nach einem der Ansprüche 7 bis 12, 14 und 15 erhalten,
- Wasser und
- mindestens ein Tensid
enthält.

17. Verwendung der POS nach einem der Ansprüche 1 bis 6 oder durch das Verfahren nach einem der Ansprüche 7 bis 12, 14 und 15 erhalten als:
- Schaumverhütungsmittel,
- Schmierstoff,
- Antihaftmittel,
- ein die Oberflächenspannung senkendes Mittel,
- schmutzabweisendes Mittel,
- oleophobes und/oder hydrophobes Mittel oder
- Ausgangsstoff für die Herstellung von Elastomeren oder Filmen, die chemischen Angriffen und Lösungsmitteln widerstehen.

18. Schmutzabweisende Zusammensetzung, **dadurch gekennzeichnet, dass** sie:
- mindestens ein POS nach einem der Ansprüche 1 bis 6 oder durch das Verfahren nach einem der Ansprüche 7 bis 12, 14 und 15 erhalten,
- und/oder mindestens eine Emulsion nach Anspruch 16 umfasst und
- das/die eingesetzte POS vorzugsweise POS ist/sind, das/die Pfropf-Substituenten, die durch perfluorierte - halogenierte Reste ― wie in Anspruch 5 definiert, bifunktionalisiert sind,
* gegebenenfalls Pfropf-Substituenten, die durch fluorierte - halogenierte Reste, die ebenfalls wie in Anspruch 5 definiert sind, monofunktionalisiert sind, und
* gegebenenfalls andere Pfropf-Substituenten, die durch andere Funktionen wie bi- oder monohalogenierte ― fluorierte Funktionen funktionalisiert sind, trägt/tragen.
